(19) **Europäisches Patentamt**
**European Patent Office**
**Office européen des brevets**

(11) **EP 4 007 373 B1**

(12) **EUROPEAN PATENT SPECIFICATION**

(45) Date of publication and mention
of the grant of the patent:
**09.08.2023 Bulletin 2023/32**

(51) International Patent Classification (IPC):
***H04W 48/18*** (2009.01)

(52) Cooperative Patent Classification (CPC):
**H04W 48/18; H04W 4/40; H04W 76/10**

(21) Application number: **20209828.1**

(22) Date of filing: **25.11.2020**

(54) **METHOD AND ELECTRONIC CONTROL UNIT FOR MANAGING AT LEAST ONE WIRELESS CONNECTIVITY SERVICE FOR AT LEAST ONE APPLICATION IN A VEHICLE**

VERFAHREN UND ELEKTRONISCHE STEUEREINHEIT ZUR VERWALTUNG MINDESTENS EINES DRAHTLOSEN KONNEKTIVITÄTSDIENSTES FÜR MINDESTENS EINE ANWENDUNG IN EINEM FAHRZEUG

PROCÉDÉ ET UNITÉ DE COMMANDE ÉLECTRONIQUE POUR LA GESTION D'AU MOINS UN SERVICE DE CONNECTIVITÉ SANS FIL POUR AU MOINS UNE APPLICATION DANS UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2022 Bulletin 2022/22**

(73) Proprietor: **Continental Automotive Technologies GmbH**
**30165 Hannover (DE)**

(72) Inventor: **Kim, Hojin c/o Continental Automotive GmbH**
**81737 Munich (DE)**

(74) Representative: **Continental Corporation**
**c/o Continental Automotive GmbH**
**Intellectual Property**
**Postfach 83 01 16**
**81701 München (DE)**

(56) References cited:
**WO-A1-2018/211508     WO-A1-2020/221554**
**US-A1- 2013 219 039**

• **XU KE ET AL: "A Fast Cloud-Based Network Selection Scheme Using Coalition Formation Games in Vehicular Networks", IEEE TRANSACTIONS ON VEHICULAR TECHNOLOGY, IEEE SERVICE CENTER, PISCATAWAY, NJ, US, vol. 64, no. 11, 1 November 2015 (2015-11-01), pages 5327-5339, XP011589395, ISSN: 0018-9545, DOI: 10.1109/TVT.2014.2379953 [retrieved on 2015-11-10]**

**Description**

The invention is concerned with a method and an electronic control unit for managing at least one wireless connectivity service for at least one application in a vehicle, wherein the vehicle comprises several connectivity devices running at least one wireless connection.

Over the last couple of years, an increasing number of vehicles started to be equipped with diverse configurations of connectivity functionalities such as Cellular, Wi-Fi, Bluetooth/Low Energy, GNSS (global navigation satellite system) along with broadcast radio. Each connectivity functionality continues to evolve based on the associated standardizations (e.g., Cellular - 2G/3G/4G/5G, Wi-Fi - 11 n/ac/ax, Bluetooth - BT3/4/5, GNSS - multi-frequency precise positioning). Additional connectivity solutions are on the rise for new automotive use cases and killer applications such as V2X (so called vehicle-to-everything), UWB (ultra wideband), LPWAN (low-power wide-area network). Also, Gigabit Ethernet is getting popular for attaching to in-vehicle connectivity group for high data transfer with multimedia content traffic. The in-vehicle connectivity functionalities have been located in many different places inside the vehicle due to several different reasons. The typical form factor includes a TCU (telematics control unit) box that contains emergency call, cellular data transfer as well as wired connections such as CAN/Ethernet (CAN - controller area network). Another exemplary type is an independent modular level solution of connectivity that can be attached on the so-called IVI (in-vehicle infotainment) system. Another solution is based on the so-called connected gateway, the enhanced version of general gateway box that is another target area for connectivity placement so that both wireless and wired connectivity functionalities can be supported. Lastly, smart antenna is the very recent concept of in-vehicle connectivity solution and its location is generally roof-top area with the integrated bunch of antennas and electronic board together so that coax cable saving and vehicle weight reduction can be achieved with lower wiring connection complexity by guaranteeing the required connectivity performances. The patent application WO 2020/221554 A1 discloses a mobile vehicle equipment comprising a V2X communication management device, connected to a cellular communication network. The communication management device comprises a Radio Access Technology selection unit which determines the RAT available to be used for transmitting a data packet, associated with a V2X application executed by the piece of mobile vehicle equipment, to at least one receiving device. The selection unit is configured to select the available RATs from a set of RATs, depending on target Quality of Service information comprising an n-tuple of performance indicators, the n-tuple of performance indicators comprising at least one performance indicator and being determined from a set of performance indicators chosen according to the V2X application.

As many connectivity functionalities are integrated into vehicle, there are critical challenges to overcome due to support of various automotive use cases using in-vehicle connectivity solutions. Those challenges include

- Increasing thermal heat with higher power dissipation,
- Increasing power consumption with limited power supply budget
- Mechanical size limitation due to diverse vehicle design concepts
- RF (radio frequency) performance limitation due to electromagnetic power radiation (especially SAR - Specific Absorption Rate),
- Absence of backup connectivity solution(s) in case of any in-vehicle connectivity failure or malfunction for specific automotive use case support,
- Higher functional requirements from vehicle manufacturers about cross-functional operations of different connectivity solutions such as, e.g., Cellular+WiFi, Cellular+Ethernet, V2X+GNSS,
- Higher functional optimization of navigation/HD map with in-vehicle connectivity for autonomous driving.

The major challenges to overcome for the full-featured connectivity operations are especially:

> Increasing thermal heat with high power dissipation occurs and it results in connectivity malfunction, operation failure or even circuit breakdown.
> Increasing power consumption is on demand due to heavy data traffic load through in-vehicle connectivity operations and it also results in serious impact on limited power budget.
> Electromagnetic power radiation issue occurs due to the placement of in-vehicle connectivity such as roof-top and any SAR violation needs to be managed.
> In-vehicle connectivity failure or malfunction can occur due to thermal heat or physical damage
> Lack of functional optimization of in-vehicle connectivity with navigation/HD map (HD - high detail) for autonomous driving.

In the following, the term "connectivity service" refers to a data transmission service provided for an application software that is run in an electronic control unit (ECU) of a vehicle, wherein the data transmission service comprises transferring the data between the application and a communication partner outside the vehicle. The transmission of the data is achieved on the basis of one single wireless connection or several combined wireless connections. Each wireless connection is operated or run by a respective electronic circuitry that is referred to as connectivity device in the sequel. The connectivity devices may be linked to an antenna configuration comprising one or more antenna.

It is an object of the present invention to provide a management for a respective connectivity service for one or more applications in a vehicle such that the underlying connectivity devices avoid at least some of the above-described technical problems.

The object is accomplished by the subject matter of the independent claims. Advantageous developments with convenient and non-trivial further embodiments of the invention are specified in the dependent claims, the following description, and the drawings.

The invention provides a method for managing at least one wireless connectivity service for at least one application in a vehicle. The invention is based on a setup where the vehicle comprises several connectivity devices running at least one wireless connection. As has been explained above, the respective wireless connectivity service is based on the at least one wireless connection.

According to the inventive method a connectivity management unit, ICMU, performs the following steps:

- operating a link quality estimator, LQE, for determining a respective link quality metric, LQM, of the respective wireless connection of each of the connectivity devices,
- operating a transmission, Tx, power estimator, TPE, for determining a respective average radiated transmission power $P_T$, and a respective SAR level $P_{SAR\_PWR}$ and a respective power consumption Pc of each connectivity device,
- operating a Quality-of-service, QoS, estimator, QSE, for determining a respective QoS mode metric, QMM, that quantifies a suitability of the respective wireless connection of each of the connectivity devices for performing the respective wireless connectivity service for at least one pre-defined traffic type t,
- operating a connectivity metric generator, CMG, for providing a connectivity device master map, CDMM, that lists the output of the link quality estimator LQE, the Tx power estimator, TPE, and the QoS estimator, QSE.

When the at least one application signals a respective demand for the respective wireless connectivity service, the connectivity management unit, ICMU, performs the steps of

- determining for the respective application (app) the respective traffic type t based on a service class of the application, e.g. one of the service classes streaming app (like video streaming) or interactive app (like Internet-browsing or telephoning or video conferencing) or non-real-time data transfer (like data download),
- operating a connectivity mode selector, CMS, for selecting for each connectivity service at least one of the connectivity devices for which a pre-defined connectivity evaluation function yields a maximized result, wherein the connectivity evaluation function maps a pre-defined data set or data sub-set of the CDMM for the determined traffic type t onto a respective evaluation value, and
- establishing the respective wireless connectivity service using the respective wireless connection of each selected connectivity device.

The invention provides the benefit that the connectivity service is established on the basis of those connectivity devices that at the time of the demand provide optimized link quality and at the same time minimized power consumption. An application may signal the need or demand of a connectivity service for exchanging data with an external service or device (i.e. outside the vehicle) and the method will choose the wireless connection that is optimal in the sense of the connectivity evaluation function, thus considering link quality, transmission power restrictions (SAR) and available QoS modes. The application will be serviced with an optimal choice of available wireless connections.

The described LQE, TPE, QSE and CMG may be implemented on the basis of software implementation for an electronic processor circuitry with processor, memory, power supply and interface functionalities. They may update their output (e.g. LQM, QMM) periodically and the CDMM may be updated accordingly. Update intervals may be adjusted flexibly as it is dependent on how it needs to be customized for specific implementation cases such as in a range from millisecond to minute basis (e.g. 1 ms to 10 min). After such an update, already running connectivity services may be re-configured based on the connectivity evaluation function.

The invention also comprises embodiments that provide additional technical advantages.

One embodiment comprises that the connectivity devices are provided in n electronic control units, ECU, with index i and each $ECU_i$ provides $k_i$ of the connectivity devices, such that each connectivity device is identified by an index i of its $ECU_i$ and an index j of the $k_i$ connectivity devices of the $ECU_i$ and wherein for selecting the at least connectivity device the following maximization of the following connectivity evaluation function is performed:

$$\max \frac{\sum_{i,j} w_{i,j} R(i,j)}{\sum_{i,j} P_T(i,j) + \sum_{i,j} P_C(i,j)},$$

wherein

$w_{i,j}$ is a pre-defined weighting factor of the i-th ECU and its j-th connectivity device, R(i,j) is a utility function of the i-th ECU and its j-th connectivity device as defined by

R(i,j) = δ{ QMM(i,j,t), LQM(i,j) }, wherein δ{ } is a pre-defined function for combining QMM and LQM. $w_{i,j}$ and δ{ } may be chosen by the skilled person to adapt the inventive method to the needs of a specific model of a vehicle.

$P_T(i,j)$ is the average radiated power of i$^{th}$ ECU and j$^{th}$ connectivity device,

Pc(i,j) is the power consumption of i$^{th}$ ECU and j$^{th}$ connectivity device.

$P_T(i,j)$ may be the additional transmission power value needed to operate the requested connectivity service with the i$^{th}$ ECU and j$^{th}$ connectivity device,

Pc(i,j) may be the is the additional power consumption value needed to operate the requested connectivity service with the i$^{th}$ ECU and j$^{th}$ connectivity device.

The maximization max() may be performed over all available connectivity devices, i.e. all indices i,j. Overheated or otherwise deactivated connectivity devices may be excluded.

One embodiment comprises that the following additional steps of the connectivity management unit, ICMU: detecting, if one of the connectivity devices overheating for each connectivity device, and if an overheated connectivity device is detected, initiating a thermal management function, and if the thermal management function fails to mitigate the overheating, excluding the connectivity device from the selection. This provides the benefit of also considering thermal issues in the management of the connectivity services.

One embodiment comprises that the thermal management function comprises the steps of:

- operating a thermal status monitor, TSM, for determining available respective thermal mitigation modes, TMMs, for different temperature ranges of each connectivity device, and switching from a current TMM to another new TMM, if the temperature of the connectivity device is in the temperature range of the new TMM, and/or
- switching to another one of the connectivity devices if the wireless connection of the other connectivity device is compatible with the wireless connection of the overheated connectivity device according to a predefined compatibility criterion, and/or
- finding an interworking connectivity device and routing a part of a data traffic of the overheated connectivity device to the interworking connectivity device instead of the overheated connectivity device.

Thus, as thermal heat gets higher in an environment along with high power dissipation, functional level thermal management may be considered to avoid the worst situation such as operation failure or circuit breakdown. That is, some type of thermal mitigation mechanism may be applied to its own connectivity service (e.g. cellular, Wi-Fi) so that any malfunction or system breakdown can be prevented. Those thermal mitigation approaches may include: data throttling, maximum Tx power back-off, limit/disable data transmission modes, voice call shutdown or service mode reduction. Additionally or alternatively, another connectivity device may be used for the connectivity service and/or at least a part of the data traffic may be routed over another connectivity device. Note that on detection of an overheated connectivity device, a connectivity service that is already running may be reconfigured by the thermal management function. The compatibility criterion may define that the new connectivity device that is to take over the data traffic must support the same traffic type t as the overheated connectivity device.

One embodiment comprises that the thermal status monitor, TSM, comprises:

- receiving sensor data for each of the connectivity devices,
- generating mapping table of temperature levels, TLs, of the connectivity devices,
- generating a look-up table of the thermal mitigation modes, TMMs, with temperature threshold levels, THs, for each of the connectivity devices, wherein the temperature levels, TL, each describe a temperature range comprising several temperature values and wherein the respective temperature threshold level, TH, indicates one of the temperature levels, TLs. Using temperature ranges provides the benefit that a hysteresis effect is achieved for switching between the different thermal mitigation modes, TMMs.

One embodiment comprises that the thermal mitigation modes, TMMs, comprise at least one of: data throttling, maximum Tx power back-off, limiting/disabling data transmission modes, shutdown or service mode reduction. It is to be noted that a thermal mitigation mode, TMM, may also have an effect on the link quality and the QoS mode, as, for example, data throttling, may reduce the bandwidth of a wireless connection. Thus, after switching to another thermal mitigation mode, TMM, the already running connectivity services may be re-configured or redistributed onto at least one other connectivity devices based on the connectivity evaluation function.

One embodiment comprises that the thermal management function comprises:

- verifying that applying the thermal management function results in a transmission power $P_T$ of each wireless connection below the respective SAR level $P_{SAR\_PWR}$ for each connectivity device and/or
- verifying that applying the thermal management function results in a link quality that meets the required QoS mode metric, QMM, for each running connectivity service. This prevents a detrimental change in any running connectivity service as it may otherwise be cause by applying, for example, a different thermal mitigation mode.

One embodiment comprises that the transmission power estimator, TPE, comprises:

- receiving proximity sensor data signaling a human body proximity to a respective antenna configuration (i.e. the one or more antenna) used by the respective connectivity device,
- determining the respective SAR level $P_{SAR\_PWR}$ based on the proximity sensor data. The SAR level is thus beneficially adapted to the current situation in the vehicle. The proximity sensor data may be generated by, e.g., a camera with an image processing unit, a proximity sensor and/or a seat occupation sensor. For electromagnetic power radiation, SAR violation can be serious as it has global standard guidelines for its limits. It is caused by electromagnetic power radiation and can be violated depending on the distance between connectivity device location and human head/body if any connectivity transmission is operated at maximum power level. Especially for so called smart antenna (self-adapting antenna), this issue could occur due to the placement of in-vehicle connectivity such as roof-top as passengers are seated and their heads could be close to the device. However, a proximity sensor may be used to program a connectivity device to reduce RF emission power when a device is near a human body part.

One embodiment comprises that the transmission power estimator, TPE, additionally comprises:

- receiving Tx power information of each of the connectivity devices,
- generating a mapping table of Tx power delta metrics TPM of the connectivity devices for the connectivity device master map, CDMM, wherein the Tx power delta metrics, TPM, is calculated for the respective connectivity device as:

$$TPM = P_{SAR\_PWR} - P_T$$

wherein the TPM is required to be larger or equal to 0. The TPM can be beneficially used for determining which connectivity device can take how much additional data traffic before reaching its SAR level. This results in an additional criterion for choosing a specific connectivity device for a newly demanded connectivity service as establishing the connectivity service results in additional data traffic in the selected connectivity devices. $P_T$ can be the current power level (without the requested connectivity service) in order to monitor the remaining headroom or it can be the power level including the connectivity service in order to verify that performing the connectivity service with the respective connectivity device will not result in a value TPM < 0.

One embodiment comprises that the link quality estimator, LQE, comprises:

- receiving link quality information for each of the connectivity devices,
- from the link quality information generating a look-up table of link quality metrics, LQM, of the connectivity devices, wherein the link quality metric, LQM, indicates a set of measurements, in particular the known measures SNR, RSSI, PER, and/or
- from the link quality information generating a mapping table of link quality levels, LQLs, from the link quality metrics, LQMs, of the connectivity devices, wherein the link quality level, LQL, indicates the connection quality of each given connectivity devices, in particular as one of highly stable, stable, unstable, highly unstable, into P levels. Using such tables reduces the processing time for determining the optimal connectivity devices.

One embodiment comprises that the connectivity devices are provided in n electronic control units, ECU, with index i and each $ECU_i$ provides $k_i$ of the connectivity devices, such that each connectivity device is identified by an index i of its $ECU_i$ and an index j of the $k_i$ connectivity devices of the $ECU_i$ and wherein the QoS estimator, QSE, comprises:

- receiving supported k QoS mode components $M_{ij}^q$ of the connectivity devices,
- generating a mapping table of the QoS mode metrics, QMMs, of the connectivity devices, wherein the respective QMM is calculated as

$$QMM(i,j,t) \triangleq \sum_{q=1}^{k} w_q \times f_q(M_{ij}^q(t))$$

wherein

QMM(·) is the QoS mode metric of the i-th ECU and its j-th connectivity device,
t is the traffic type index,
$w_q$ is a pre-defined weight value for signaling a pre-defined priority level of q-th QoS mode metric, and
$f_q(M_{ij}^q)$ is a pre-defined function of the q-th QoS mode component $M_{ij}^q$.

This provides the benefit that for a given traffic type t, the suitability of the connectivity device is expressed in a single value. $f_q()$ allows to combine values of different units (e.g. delay in Milliseconds and bandwidth in bits per second).

One embodiment comprises that as the QoS mode components $M_{ij}^q$ at least one of the following quantities is provided: packet throughput, error rate, delay, bandwidth, jitter.

One embodiment comprises that as the pre-defined traffic types t, at least one of background, best effort, voice, video is provided. For example, a voice over IP, VoIP, telephone call is of traffic type "voice".

One embodiment comprises the following additional steps:

- generating a Connectivity Quality Data Map, CQDM, based on the connectivity device master map, CDMM, to indicate an in-vehicle connectivity device quality level for each wireless connection by temporally quantizing a pre-defined data set or data subset of the CDMM using a pre-defined averaging function for a pre-defined average time interval T, and/or
- generating a Connectivity Zone Map, CZM, by geographically quantizing geographical locations by mapping with the Connectivity Quality Data Map, CQDM, into pre-defined connectivity zones such that the data of the CQDM is mapped onto geographical location information depending on the location where they applied. A suitable averaging function may comprise the sum or integral of the respective metric values (e.g. TMM, QMM, LQM, LQL) over the time interval T may be used. Such maps may be used for planning a connectivity service. For example, planning ahead for a known route can be provided by choosing a connectivity device that will be able to provide the connectivity device with at least a predefined minimum reliability value derived from the CZM for that connectivity device.

The method also comprises the combinations of the features of the described embodiments.

The invention also comprise an Electronic control unit with an electronic processor circuitry, wherein the electronic control unit is designed to control data traffic between a) at least one electronic control unit running at least one application and b) at least one electronic control unit running at least one connectivity device and wherein the electronic processor circuitry is designed to perform an embodiment of the inventive a method.

The invention also comprises a vehicle with the described electronic control unit. The vehicle may be a passenger vehicle or a truck.

In the following an exemplary implementation of the invention is described. The figures show:

Fig. 1      a schematic illustration of an embodiment of the vehicle with the inventive electronic control unit;
Fig. 2      a schematic illustration of network domains of the vehicle;
Fig. 3      a schematic illustration of a connectivity ECU with connectivity devices;
Fig. 4      a schematic illustration of a design of the connectivity ECU;
Fig. 5      a functional block diagram of an exemplary connectivity management unit ICMU;
Fig. 6      a functional block diagram of an exemplary thermal status monitor TSM;
Fig. 7      an exemplary temperature mapping table;
Fig. 8      an exemplary mitigation look-up table;
Fig. 9      a functional block diagram of an exemplary link quality estimator LQE;
Fig. 10     an exemplary LQE look-up table;
Fig. 11     an exemplary LQE mapping table;
Fig. 12     a functional block diagram of an exemplary Tx power estimator TPE;

Fig. 13    an exemplary TPE mapping table;

Fig. 14    a functional block diagram of an exemplary QoS estimator QSE;

Fig. 15    an exemplary QSE mapping table;

Fig. 16    an exemplary table for QoS mode metric components;

Fig. 17    an exemplary connectivity device master map CDMM;

Fig. 18    a flow chart of an embodiment of the inventive method;

Fig. 19    an exemplary connectivity zone map; and

Fig. 20    an exemplary connectivity quality data map CQDM.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

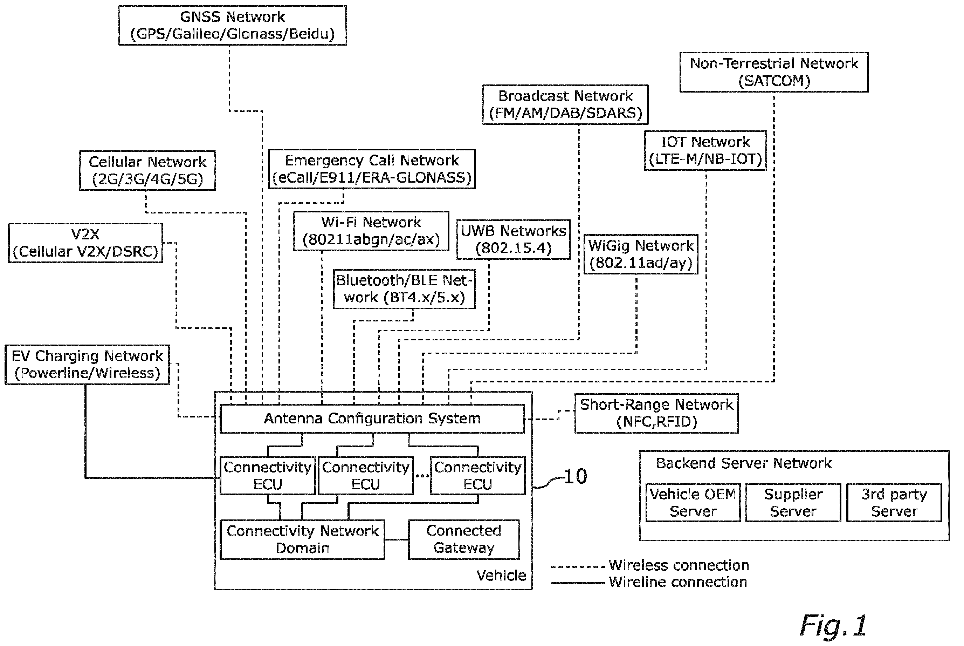

Fig. 1 shows a vehicle 10 comprising one or several (a number n) connectivity ECUs ($ECU_i$) that each may provide $k_i$ connectivity devices for operating one or several of the wireless connection of the shown standards. The vehicle 10 may provide all or only a subset of the shown standards. Each connectivity ECU may be electrically linked to an antenna connectivity system that may comprise one antenna or several antennas. The connectivity ECUs may be connected to a connectivity network domain that may be based, e.g., on an Ethernet. A connected gateway may connect the connectivity network domain to at least one application ECU (not shown) running each at least one application that may signal a demand for a connectivity service. The respective connectivity service may provide a functionality for transmitting data between the respective application and a respective server of a backend server network that may be part of the Internet.

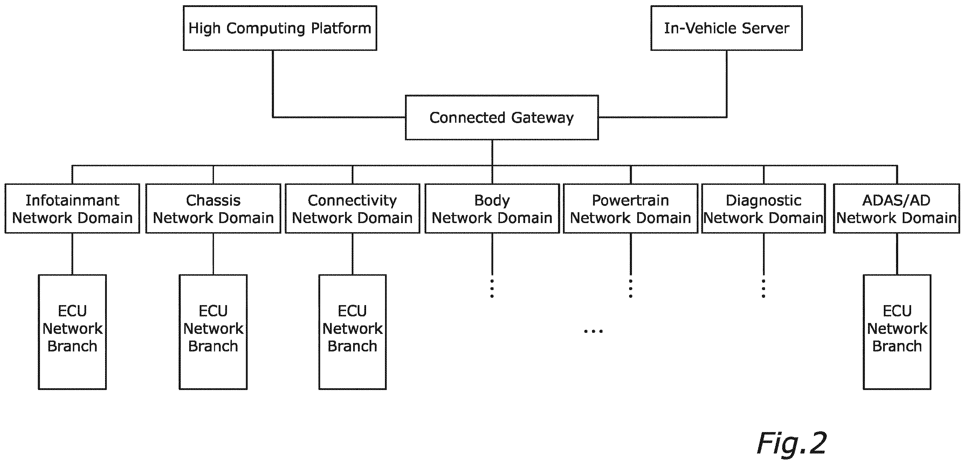

Fig. 2 shows how the application ECUs may be grouped in network domains that may be branches of a switched network. The connected gateway may serve as a switch or gateway. At least one application may be run on an in-vehicle server and/or a high-computing platform. The connectivity network domain may provide the communication control based on connectivity devices for, e.g., cellular, Wi-Fi, bluetooth, broadcast radio. One or more of the following components may be provided the vehicle 10. An infotainment network domain for audio/video, navigation; a chassis network domain for steering control, airbag control, braking system; a powertrain network domain for engine control, transmission control; a body network domain for the instrument cluster, door locking, climate control; an ADAS/AD network domain for sensor fusion control (e.g. Lidar, radar, ultrasonic); a diagnostic network domain for OBD (on-board diagnosis).

As many functions are networked within a domain, but are also networked with one another across domain boundaries, the connected gateway may provide as a central hub or functional block for network communication to interconnect with different ECUs across different domains (e.g., interdomain backbone). It may also handle authentication, protocol conversion, data integrity and secure key storage and/or management for both external devices connected to the vehicle. Authentication makes sure that only valid devices are attached to the gateway. It can also include partial connectivity service of its own, e.g. eCall. The whole sub-networks under the gateway can be either logical or physical units or both for invehicle connections. Each network domain may contain one or several ECUs. Connectivity is also part of a network domain with other domains such as, e.g., infotainment, chassis, body, powertrain. Additionally, or alternatively, in-vehicle server and high-computing platform can be connected to in-vehicle network.

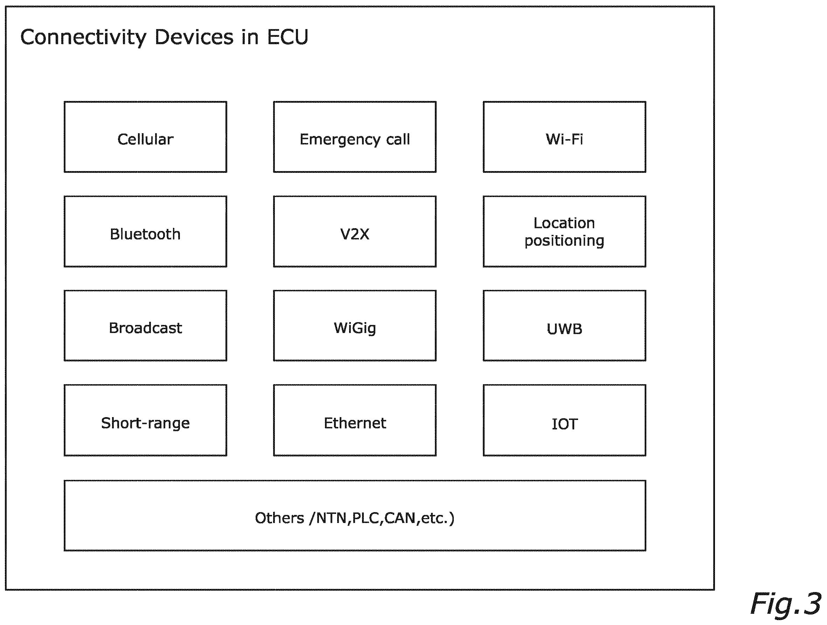

Fig. 3 illustrated an exemplary design of a connectivity ECU. The described connectivity sub-network has a collection of physical/logical connections with connectivity ECUs that may contain one or several of the following connectivity devices:

> Cellular: 2G/3G/4G and 5G

> Wi-Fi : 802.11abgn, ac, ax

> WiGig : 802.11ad, ay

> Bluetooth/LE : BT4.x/5.x

> Emergency call : eCall, ERA-GLONASS, E911

> Location positioning : GNSS (GPS/Galileo/Glonass/Beidu)

> Cellular IOT : LTE-M, NB-IOT

> Broadcast: FM/AM/DAB/SDARS radio

> V2X : Cellular V2X (3GPP), DSRC (802.11p)

> UWB : 802.15.4

> Short-range : NFC, RFID

> Ethernet: 802.3/1, OPEN Alliance

> one or more of: NTN, PLC, CAN HS/FD.

More connectivity devices can be added to this sub-network and it is not limited to the already mentioned solutions. Only a sub-set of the listed connectivity devices may be provided. Multiple connectivity sub-networks can be added to connected gateway.

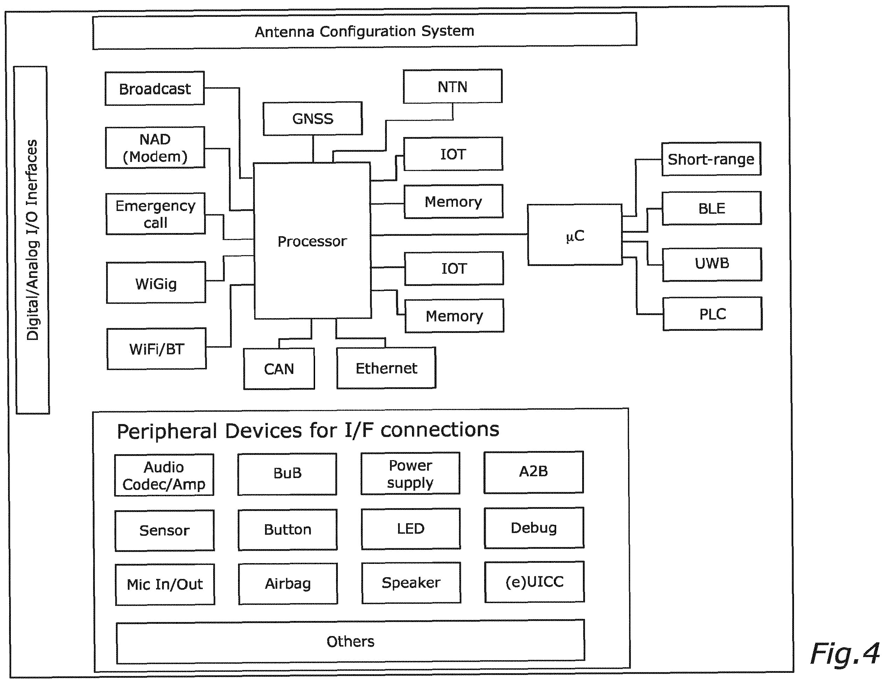

Fig. 4 illustrated an exemplary detailed design of a connectivity ECU. A connectivity ECU may have a set of connectivity devices with various configurations depending on target applications and functionalities of each ECU. With the configured connectivity devices in ECU, the default devices may also include at least one of a processor, microcontroller, memory, HSM, I/O interfaces and peripheral devices for I/F connections to external network or devices. For radio access functional support, the antenna configuration system is connected to connectivity ECUs through connectors.

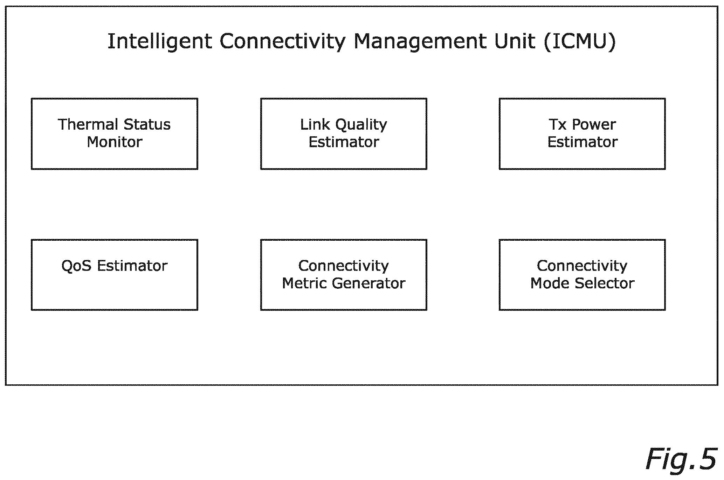

Fig. 5 shows a functional block diagram of a connectivity management unit that is termed as intelligent connectivity management unit ICMU, as it provided several decision making algorithms. The ICMU may be implemented in the connectivity gateway or in one or several connectivity ECUs or in a separate ECU.

Intelligent Connectivity Management Unit (ICMU) may designed as a functional unit of managing the whole connectivity sub-network with the associated connectivity ECUs. The main roles of ICMU may include at least one of:

> To monitor thermal status of each connectivity services across all connectivity ECUs,
> To estimate connectivity link quality information reported from all connectivity ECUs,
> To estimate different QoS modes supported by each connectivity ECUs and specific connectivity services,
> To determine target power level of each connectivity services chosen from each connectivity ECUs,
> To generate connectivity metrics for connectivity selection process,
> To select the best connectivity services from each connectivity ECUs to support each QoS modes.

Key benefits that can be realized with the ICMU, can be:

> To enhance thermal management of each connectivity services across all connectivity ECUs,
> To minimize use of power consumption of all activated connectivity services,
> To optimize seamless connectivity serviceal operations across all connectivity ECUs for crossfunctional use cases and backup connectivity support,
> To provide workaround of meeting SAR requirements with electromagnetic power radiation,
> To provide information to generate connectivity zone map that can be integrated with other map layers such as navigation map, HD map, ADAS map.

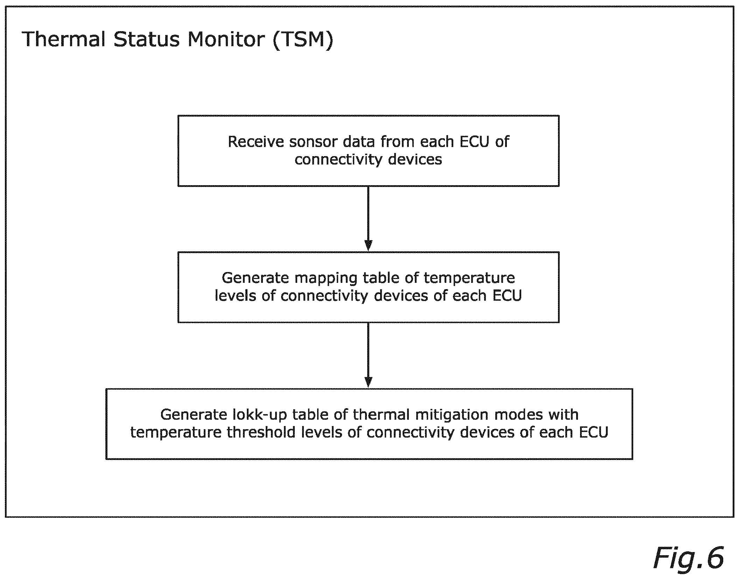

Fig. 6 shows a functional block diagram of the Thermal Status Monitor (TSM) of Fig. 5. Thermal conditions of connectivity devices of each ECUs in the connectivity sub-network are monitored. Temperature sensors are placed close to connectivity devices of each ECUs. Their sensor data that can be reported back to ICMU as input to TSM. For example, an onboard thermistor can be implemented.

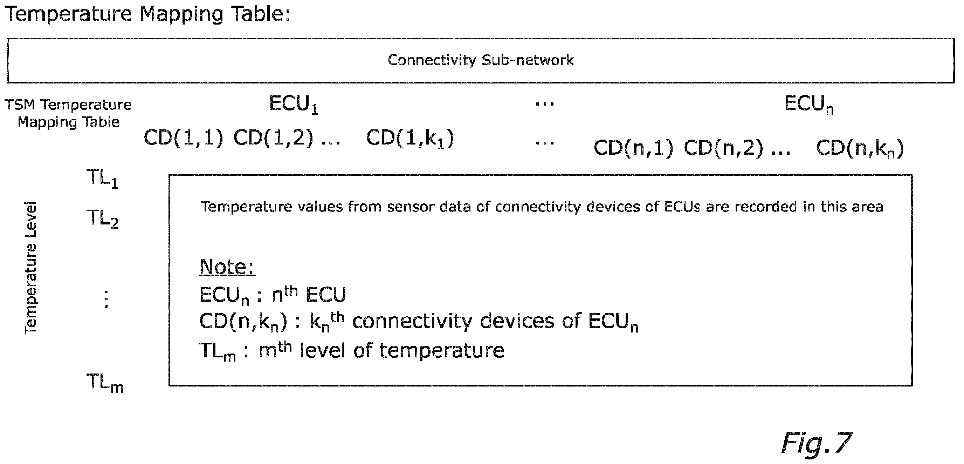

Fig. 7 illustrates how the TSM can provide temperature mapping table for mapping of the temperature values to one of m temperature levels TL (temperature ranges) of each connectivity devices of each ECUs. It may generate a look-up table of available thermal mitigation modes of connectivity devices of each ECUs. As an example, $TL_1$ may range from 105°C to 85°C and $TL_m$ may range from -15°C to - 25°C.

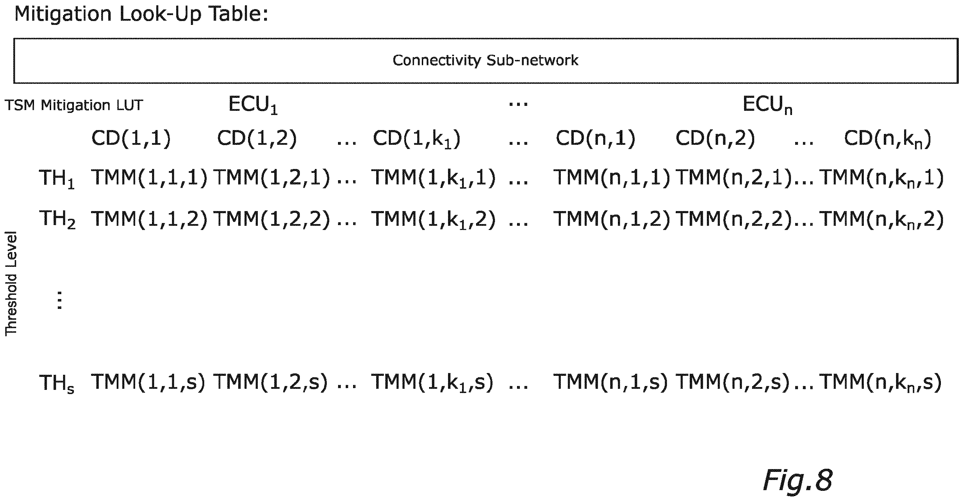

Fig. 8 illustrates an example of a mitigation look-up table. A thermal mitigation mode, TMM(·), indicates valid mitigation scheme applied to each threshold level (THi). Examples of a TMM are: fan speed value, setting the cooling power, data throttling.

The thermal management function may get temperature sensor reading and multilevel mitigation states can be defined with thermal threshold/mitigation decision. For this purpose, thermal management configuration file can be also generated to interact with device temperature reading status for mitigation operations. On the other hand, there are other possible mechanical/physical approaches to lessen thermal heat such as thermal spreading with heat pipe/TIM (thermal interface material), shielding, and fan use, just to name some examples.

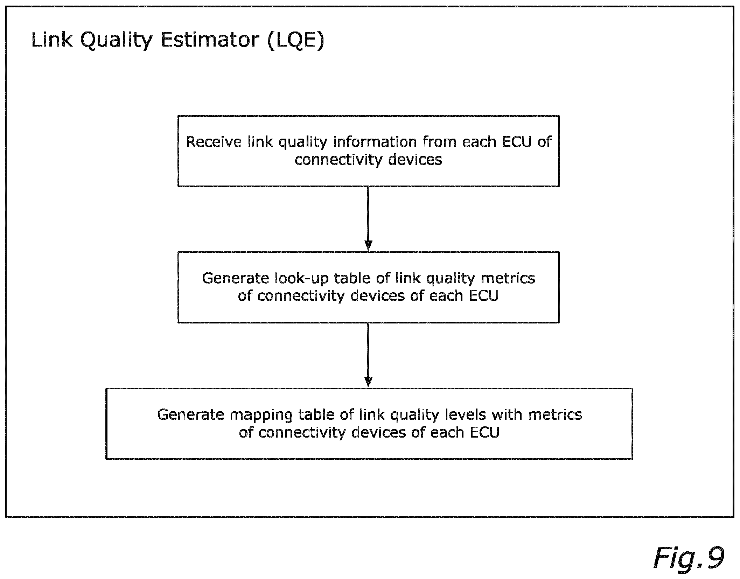

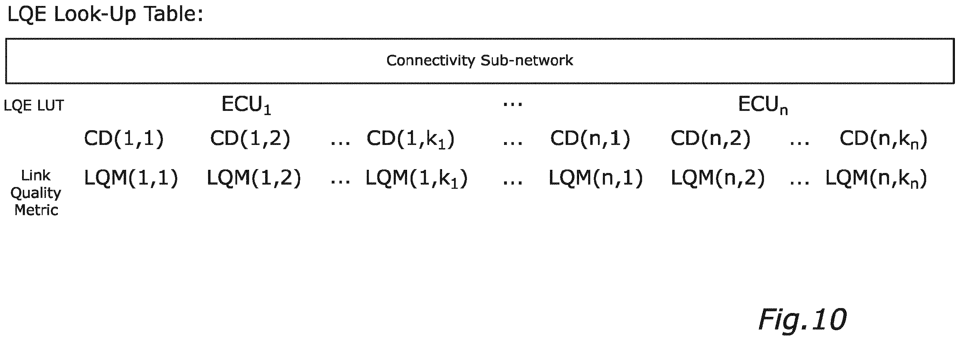

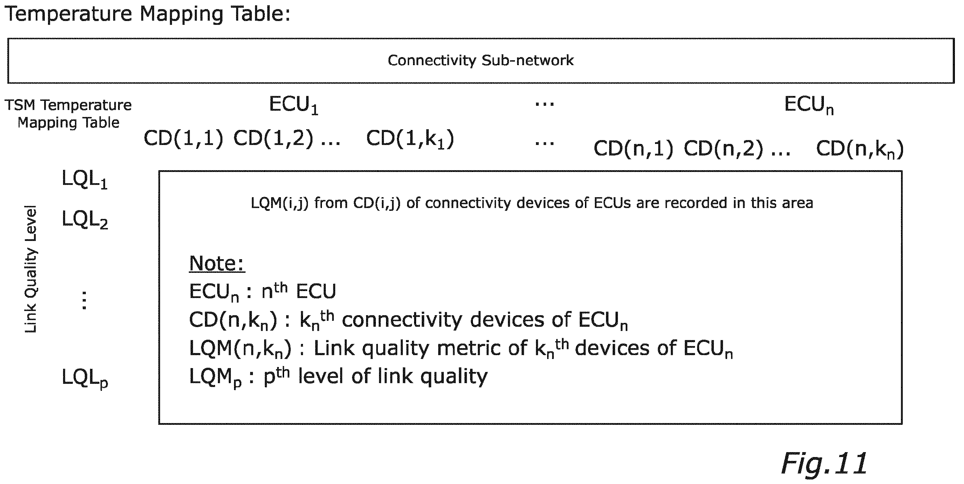

Fig. 9 illustrates a functional block diagram of the Link Quality Estimator, LQE, of Fig. 5. Link quality information may be reported to the ICMU from connectivity devices of each ECUs in connectivity sub-network. The link quality information contains a metric of estimating the current quality of the connectivity channel (e.g., RSSI, SNR, PER, SIR). The LQE may generate a look-up table (Fig. 10) of link quality metrics LQM of each connectivity devices of each ECUs. Link quality metric, LQM(·), indicates a set of measurements such as, e.g., at least one of SNR, RSSI, PER, SIR. The LQE may generate mapping table (Fig. 11) of link quality levels LQL of each connectivity devices of each ECUs. The respective link quality level LQL indicates the connection quality of each given connectivity devices such as, e.g., highly stable, stable, unstable, highly unstable. - MOS with quantization into P levels.

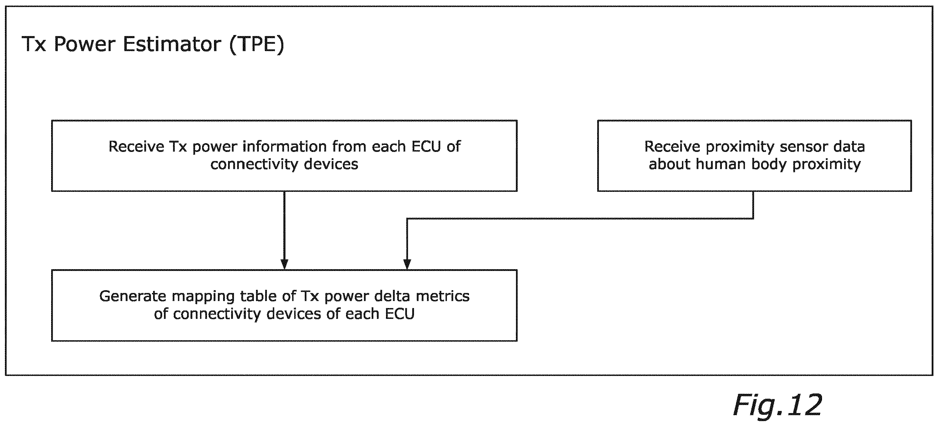

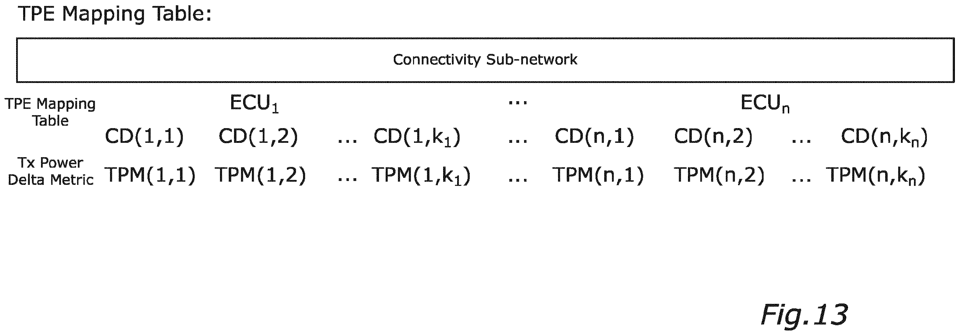

Fig. 12 illustrates a functional block diagram of the Tx Power Estimator TPE of Fig 5. Tx power information may be reported to ICMU from connectivity devices of each ECUs in connectivity subnetwork. The Tx power information indicates average power (the time-averaged power level of data packets) transmitted for data transfer with the given connectivity device. The TPE may generate mapping table of Tx power delta metrics of each connectivity devices of each ECUs (Fig. 13). The Tx power delta metric TPM(·) indicates the difference between average radiated power (the time-averaged power level of data packets) and the required power level for SAR based on proximity sensor data:

$$TPM(i,j) \triangleq P_{SAR\_pwr}(i,j) - P_T(i,j)$$

wherein

TPM(.) is the delta value of difference between radiated power and SAR-based required power (ith ECU and jth connectivity device),
$P_T(i,j)$ is the average radiated power as described above,
$P_{SAR\_PWR}(i,j)$ is the allowed or required power to meet SAR level.

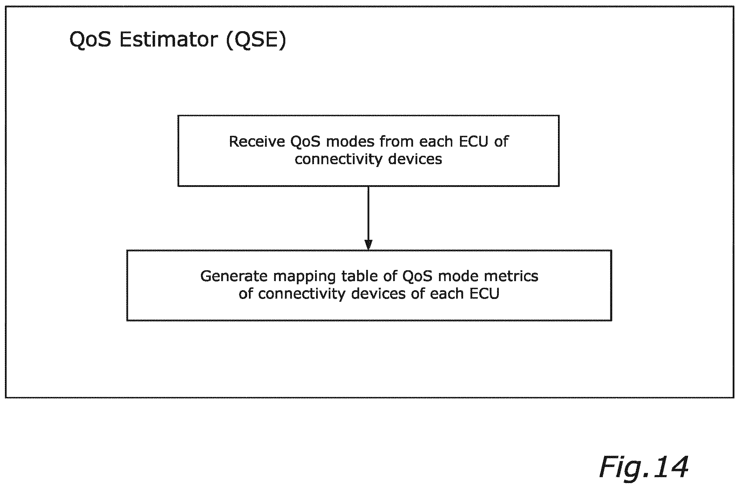

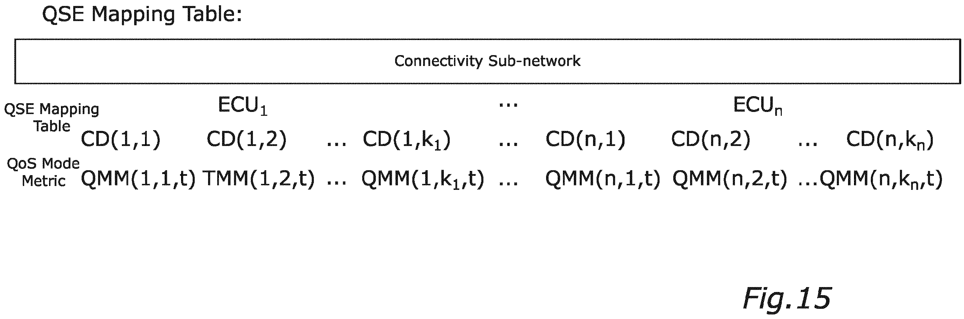

Fig. 14 illustrates a functional block diagram of the QoS Estimator QSE of Fig. 5. QoS modes supported by each connectivity ECUs and specific connectivity services and/or connectivity devices are reported to the ICMU from connectivity devices of each ECUs in connectivity sub-network. A QoS mode indicates radio traffic type/class of service such as, e.g., at least one of background, best effort, video, voice, based on data, streaming, interactive services with real-time and non-real-time applications. Each radio traffic type/class of service contains the required bandwidth, priority level, delay, jitter, packet throughput, error rate. This may be pre-defined by the skilled person. Each connectivity type has its own QoS mechanism such as, e.g., QCI (QoS class indicator) for cellular.
For each connectivity device, a QMM-value may be determined resulting a QSE mapping table (Fig. 15) based on the calculation:

$$QMM(i,j,t) \triangleq \sum_{q=1}^{k} w_q \times f_q(M_{ij}^q(t))$$

wherein

QMM(.) is the QoS mode metric of the i-th ECU and its j-th connectivity device,
t is the traffic type index,
$w_q$ is a pre-defined weight value for signaling a pre-defined priority level of q-th QoS mode metric, and
$f_q(M_{ij}^q)$ is a pre-defined function of the q-th QoS mode component $M_{ij}^q$.

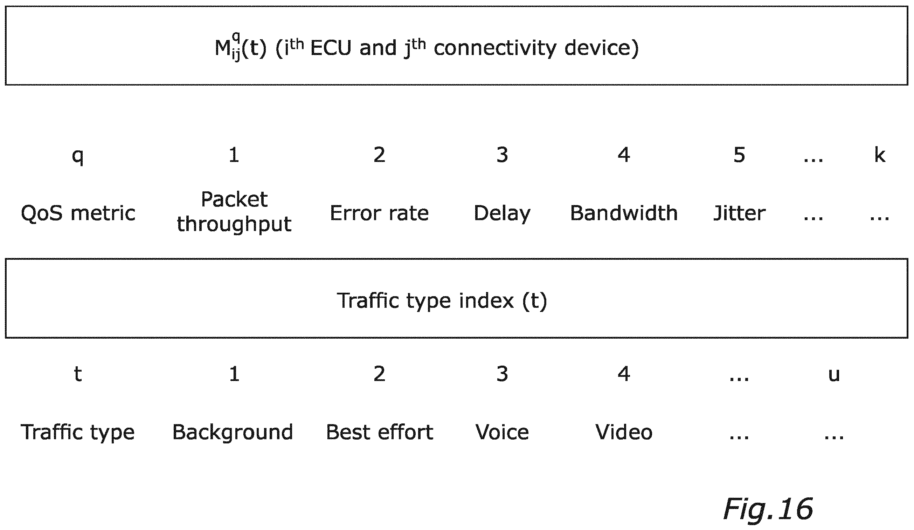

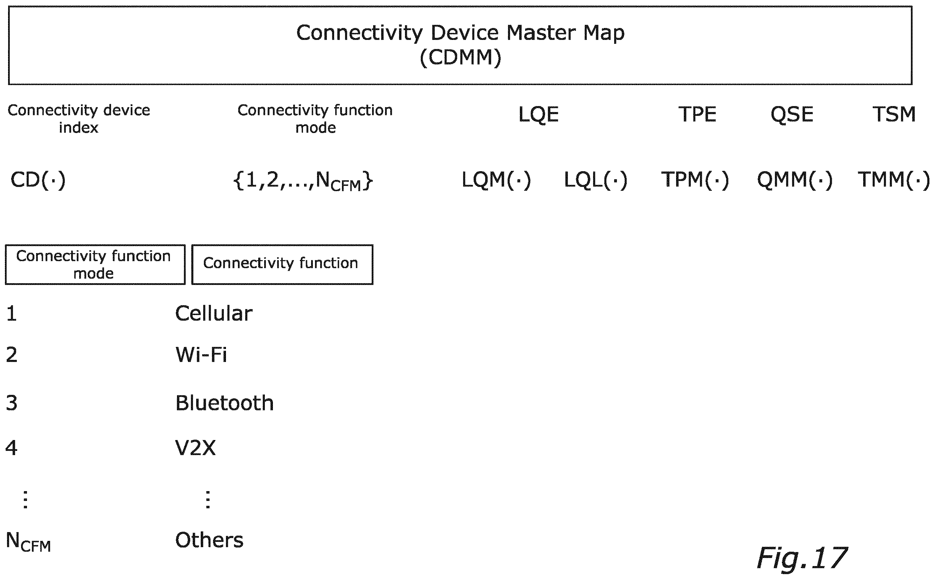

The value of $w_q$ and the function $f_q$ may be adapted to the demands of the skilled person. $f_q$ may be, e.g., the identity function. Values for $w_q$ may be in the range from 0 to 1.
The mapping from a traffic type t to the q-th QoS mode component $M_{ij}^q$ may be implemented on the basis of a table as shown in Fig. 16. If an application that is signaling a demand for a connectivity service is determined to be of traffic type t, the table shows the demand for the specific values for the QoS mode component $M_{ij}^q$. Recommended values for $M_{ij}^q$ are available in the prior art.
The Connectivity Metric Generator CMG may generate a metric to be used for connectivity mode selection criteria across connectivity devices of each ECUs. It provides the basis for maximizing a weighted utility function R(i,j), e.g., total throughput, with minimization of total average radiated power $P_T$ and power consumption Pc across connectivity devices of ECUs. The weighted utility function R(i,j) is defined as a function of QMM(·) and LQM(.). A weight factor $w_{i,j}$ may be dynamically determined by prioritizing applications/services supported by connectivity devices of ECUs. As more functional connectivity solutions are integrated into in-vehicle system architecture, the overall power consumption management is significant to utilize the limited power budget. For example, Tx power can be dynamically adjusted to link connection channel status so that some amount of power consumption can be saved. Also duty cycle can be adapted to save power depending on service modes and connectivity types.
The CMG may then generate a connectivity device master map CDMM (as exemplarily shown in Fig. 17) based on the following inputs from other functional blocks:

> Thermal status

> Link quality status
> Tx power level
> QoS mode

It may generate the connectivity device master map containing updates of output from the above functional blocks. This functionality is the basis of Connectivity Mode Selector CMS. This may provide the indices i,j for an optimized choice of a connectivity device i,j :

$$\max \frac{\sum_{i,j} w_{i,j} R(i,j)}{\sum_{i,j} P_T(i,j) + \sum_{i,j} P_C(i,j)},$$

wherein

$w_{i,j}$ is a pre-defined weighting factor of the i-th ECU and its j-th connectivity device, R(i,j) is a utility function of the i-th ECU and its j-th connectivity device with
R(i,j) = δ{ QMM(i,j,t), LQM(i,j) }, wherein δ{ } is a pre-defined function for combining QMM and LQM.
$P_T(i,j)$ is the average radiated power of $i^{th}$ ECU and $j^{th}$ connectivity device as described above,
Pc(i,j) is the power consumption of $i^{th}$ ECU and $j^{th}$ connectivity device as described above.

The connectivity evaluation function can be regarded as an inverse cost function. Thus, minimizing a cost function is equivalent to maximizing the connectivity evaluation function.
If several connectivity devices are to be used, a single connectivity device may be determined and then its indices i,j are excluded from the sum operator and the maximization operation is repeated until the required number of connectivity devices has been determined.

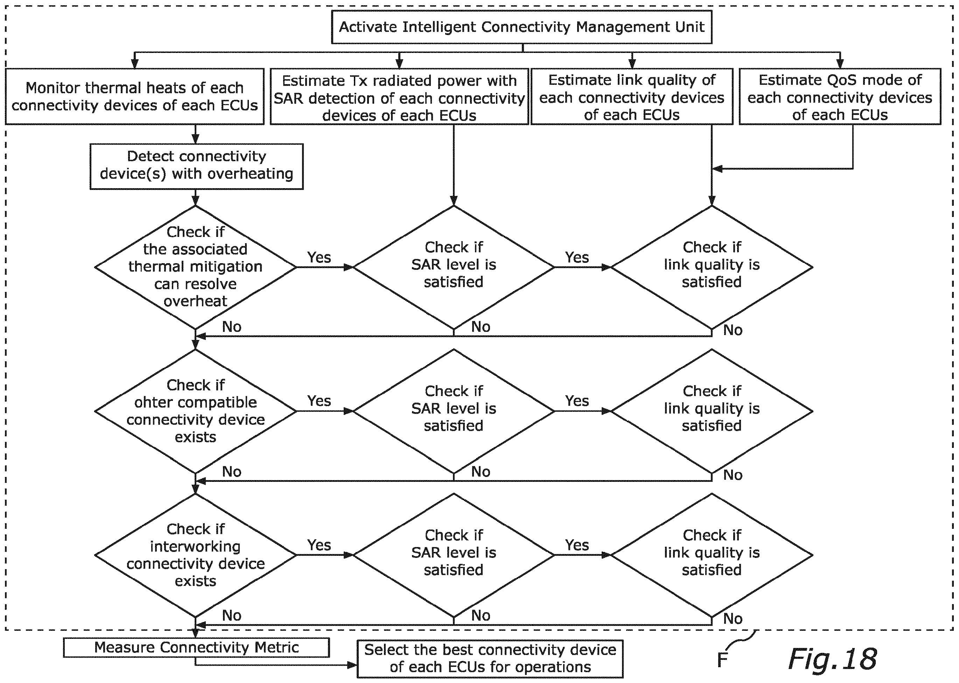

Fig. 18 illustrates the steps of a method for selecting the at least one connectivity device for providing a connectivity service of a requesting application.
The Connectivity Mode Selector CMS may manage the selection process of connectivity devices of each connectivity ECUs to support each QoS modes on demand based on the output of the CMG that considers the following conditions of each connectivity devices:

> Link quality status,
> Power radiation level,
> Thermal heat/power dissipation level, and
> QoS mode on demand.

An additional thermal management function F may be provided for relieving or excluding overheated connectivity devices. The Connectivity Mode Selector CMS finally selects the best connectivity devices of each connectivity ECUs.

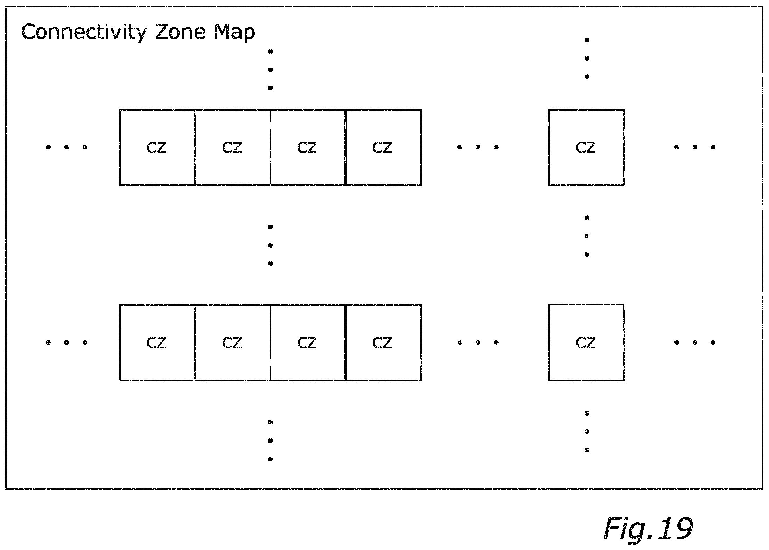

Fig. 19 illustrates a connectivity zone map CZM that may be generated for planning a journey of the vehicle and/or for providing a map of current connectivity conditions. Vehicles can be in any location of connectivity zone, CZ, blocks. CZ blocks can be dynamically adjusted and/or configured. For each CZ block, time-averaged metrics from the connectivity device master map CDMM can be provided from a connectivity quality data map CQDM.

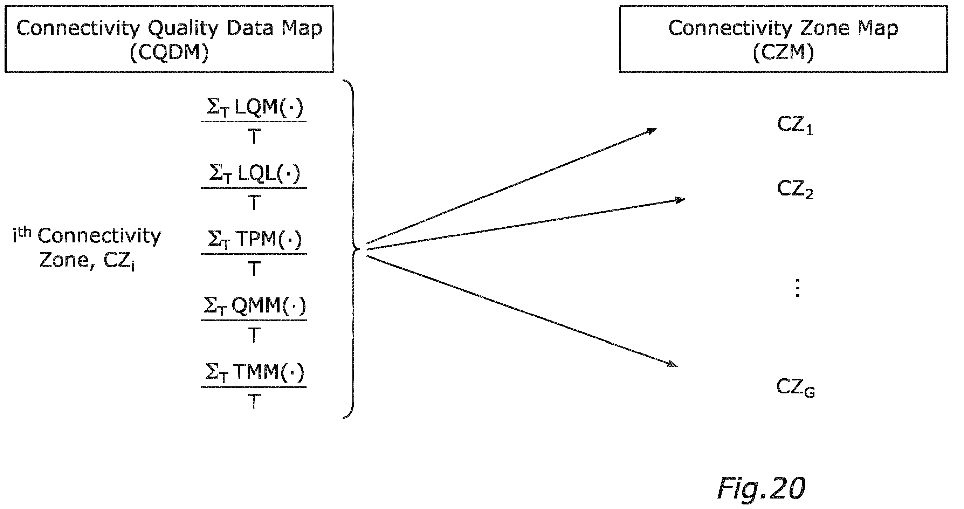

Fig. 20 illustrates a possible way of generating the CQDM. For each connectivity zone $CZ_i$ a time average over a time interval T may be calculated for one or several of the metrics from the CDMM.
CZ block size and CQDM signaling time interval may be set by the skilled person.
After each time interval T, the newly generated mapping data of CQDM with CZM can be fused with other information about HD map and location-positioning data. CQDM and CZM can be also integrated with other map layers such as navigation map, HD map, ADAS map.
The Connectivity Quality Data Map, CQDM, is generated based on connectivity device master map CDMM to indicate in-vehicle connectivity device quality level for each link connection. It is the quantized data set/subset of CDMM with the pre-defined average time interval T. The Connectivity Zone Map, CZM, is the quantized map of geographical locations for mapping with CQDM. The CQDM is mapped onto geographical location information to generate CZM (see Fig. 19). It is thus combined with the CQDM.
The CQDM for the positioned CZ may be sent to a backend server. The backend server taking the CQDM and the CZM from vehicle 10 and from further other vehicles can generate big data for incremental map updates about connectivity zone information.

The CQDM for the positioned CZ may be used for incremental map updates about connectivity zone information. This generates historic connectivity map data. For a future journey of the vehicle this allows for predicting which connectivity device may maximize the connectivity evaluation function in a future time interval and/or for a region that lies ahead on a planned driving route of the vehicle. This can be integrated into the estimate of how stable a connectivity service will be during a journey (e.g. the LQM), if a specific connectivity device will be used. The vehicle may also be provided with external map data from said server such that the vehicle may also predict the link quality for regions that it did not travel before.

The ICMU may also provide one or several of the following modes of operations for a driver's choice:

| ICMU Mode | ICMU Operation Setting |
| --- | --- |
| Off Mode | ICMU operation is disabled |
| Eco Mode | The default connectivity device operation (pre-configurable) is enabled only |
| Passenger Mode | Passenger Service SIM (PSS) based connectivity device operation is prioritized |
| Business Mode | Vehicle Service SIM (VSS) based connectivity device operation is prioritized |
| Comfort Mode | Full-featured operation of ICMU |

Additional functionalities may be provided, especially:

> Using the output of ICMU, in-vehicle body control can be leveraged to adjust passenger seats to optimize its position against SAR effect.
> In setting the best route of destination location for driving, CZM is utilized to provide the connectivity-friendly routes on top of the legacy route generation mechanism.
> In the perspective of performance and functionalities, the enhancements of in-vehicle connectivity solutions by having ICMU include:

-> Minimum use of power consumption
-> Improved thermal management
-> Seamless in-vehicle connectivity operations for cross-functional use cases and backup connectivity support

> Support of connectivity zone map based routes for autonomous driving.

This setup tackles the challenges so as to resolve major part of them based on a set of different approaches. Based on this setup, the following aim is achieve:

> Minimum use of power consumption,
> Improved thermal management,
> Robust connectivity service operations against mechanical limitations,
> Seamless in-vehicle connectivity operations for cross-functional use cases and backup connectivity support,
> Alternative way of meeting SAR with limited power radiation,
> Enhanced map functionality for autonomous driving with connectivity zone map.

Overall, the example shows how a connectivity management unit, ICMU, is provided by the invention.

Reference signs

| | |
| --- | --- |
| 10 | vehicle |
| CDMM | connectivity device master map |
| CQDM | connectivity quality data map |
| F | thermal management function |
| ICMU | connectivity management unit |
| LQE | link quality estimator |
| QMM | QoS mode metric |
| t | Traffic type |

TH        Threshold level
TMM       Thermal mitigation mode
TPE       Transmission power estimator
TPM       Tx power delta metric
TSM       thermal status monitor


**Claims**

1. Method for managing at least one wireless connectivity service for at least one application in a vehicle, wherein the vehicle comprises several connectivity devices running at least one wireless connection, wherein the respective wireless connectivity service is based on the at least one wireless connection, wherein a connectivity management unit, ICMU, performs the following steps:

   - operating a link quality estimator, LQE, for determining a respective link quality metric, LQM, of the respective wireless connection of each of the connectivity devices,
   - operating a transmission, Tx, power estimator, TPE, for determining a respective average radiated transmission power $P_T$, and a respective SAR level $P_{SAR\_PWR}$ and a respective power consumption Pc of each connectivity device,
   - operating a Quality-of-service, QoS, estimator, QSE, for determining a respective QoS mode metric, QMM, that quantifies a suitability of the respective wireless connection of each of the connectivity devices for performing the respective wireless connectivity service for at least one pre-defined traffic type t,
   - operating a connectivity metric generator, CMG, for providing a connectivity device master map, CDMM, that lists the output of the link quality estimator LQE, the Tx power estimator, TPE, and the QoS estimator, QSE,
   - when the at least one application signals a respective demand for the respective wireless connectivity service, determining for the respective connectivity service the respective traffic type t based on a service class of the application,
   - operating a connectivity mode selector, CMS, for selecting for each application at least one of the connectivity devices for which a connectivity evaluation function yields a maximized result, wherein the connectivity evaluation function maps a pre-defined data set or data sub-set of the connectivity device master map, CDMM, for the determined traffic type t onto a respective evaluation value,
   - establishing the respective wireless connectivity service using the respective wireless connection of each selected connectivity device.

2. Method according to claim 1, wherein the connectivity devices are provided in n electronic control units, ECU, with index i and each $ECU_i$ provides $k_i$ of the connectivity devices, such that each connectivity device is identified by an index i of its $ECU_i$ and an index j of the $k_i$ connectivity devices of the $ECU_i$ and wherein for selecting the at least connectivity device the following maximization of the connectivity evaluation function is performed:

$$\max \frac{\sum_{i,j} w_{i,j} R(i,j)}{\sum_{i,j} P_T(i,j) + \sum_{i,j} P_C(i,j)},$$

wherein

   $w_{i,j}$ is a pre-defined weighting factor of the i-th ECU and its j-th connectivity device,
   R(i,j) is a utility function of the i-th ECU and its j-th connectivity device with R(i,j) = $\delta$\{ QMM(i,j,t), LQM(i,j) \},
   wherein $\delta$\{ \} is a pre-defined function for combining QMM and LQM.

3. Method according to any of the preceding claims, comprising the following additional steps of the connectivity management unit, ICMU:

   - detecting, if one of the connectivity devices is overheating,
   - if an overheated connectivity device is detected, initiating a thermal management function and if the thermal management function fails, excluding the connectivity device from the selection.

4. Method according to claim 3, wherein the thermal management function ^ comprises:

- operating a thermal status monitor, TSM, for determining available respective thermal mitigation modes, TMMs, for different temperature ranges of each connectivity device, and switching from a current TMM to another new TMM, if the temperature of the connectivity device is in the temperature range of the new TMM, and/or
- switching to another one of the connectivity devices if the wireless connection of the other connectivity device is compatible with the wireless connection of the overheated connectivity device according to a predefined compatibility criterion, and/or
- finding an interworking connectivity device and routing a part of a data traffic of the overheated connectivity device to the interworking connectivity device instead of the overheated connectivity device.

5. Method according to claim 4, wherein the thermal status monitor, TSM, comprises:

- receiving sensor data for each of the connectivity devices,
- generating mapping table of temperature levels, TLs, of the connectivity devices,
- generating a look-up table of the thermal mitigation modes, TMMs, with temperature threshold levels, THs, for each of the connectivity devices, wherein the temperature levels, TL, each describe a temperature range comprising several temperature values and wherein the respective temperature threshold level, TH, indicates one of the temperature levels, TLs.

6. Method according to claim 4 or 5, wherein the thermal mitigation modes, TMMs, comprise at least one of: data throttling, maximum Tx power back-off, limiting/disabling data transmission modes, shutdown, service mode reduction.

7. Method according to any of claims 3 to 6, wherein the thermal management function comprises:

- verifying that applying the thermal management function results in a transmission power $P_T$ of each wireless connection below the respective SAR level $P_{SAR\_PWR}$ for each connectivity device and/or
- verifying that applying the thermal management function tFt results in a link quality that meets the required QoS mode metric, QMM, for each running connectivity service.

8. Method according to any preceding claim, wherein the transmission power estimator, TPE, comprises:

- receiving proximity sensor data signaling a human body proximity to a respective antenna configuration used by the respective connectivity device,
- determining the respective SAR level $P_{SAR\_PWR}$ based on the proximity sensor data.

9. Method according to claim 8, wherein the transmission power estimator, TPE, additionally comprises:

- receiving Tx power information of each of the connectivity devices,
- generating a mapping table of Tx power delta metrics TPM of the connectivity devices for the connectivity device master map, CDMM, wherein the Tx power delta metrics, TPM, is calculated for the respective connectivity device as:

$$TPM = P_{SAR\_PWR} - P_T,$$

wherein TPM is required to be larger or equal to 0.

10. Method according to any preceding claim, wherein the link quality estimator, LQE, comprises:

- receiving pre-defined link quality information for each of the connectivity devices,
- from the link quality information generating a look-up table of link quality metrics, LQM, of the connectivity devices, wherein the link quality metrics, LQM, each indicates a set of measurements, in particular SNR, RSSI, PER, and/or
- from the link quality information and/or from the link quality metrics, LQMs, generating a mapping table of link quality levels, LQLs, wherein the link quality level, LQL, indicates the connection quality of each given connectivity devices, in particular as one of highly stable, stable, unstable, highly unstable, into P levels.

**11.** Method according to any of the preceding claims, wherein the connectivity devices are provided in n electronic control units, ECU, with index i and each $ECU_i$ provides $k_i$ of the connectivity devices, such that each connectivity device is identified by an index i of its $ECU_i$ and an index j of the $k_i$ connectivity devices of the $ECU_i$ and wherein the QoS estimator, QSE, comprises:

- receiving supported k QoS mode components $M_{ij}{}^q$ of the connectivity devices,
- generating a mapping table of the QoS mode metrics, QMMs, of the connectivity devices, wherein the respective QMM is calculated as

$$QMM(i,j,t) \triangleq \sum_{q=1}^{k} w_q \times f_q(M_{ij}^q(t))$$

wherein

QMM(·) is the QoS mode metric of the i-th ECU and its j-th connectivity device,
t is the traffic type index,
$w_q$ is a pre-defined weight value for signaling a pre-defined priority level of q-th QoS mode metric, and
$f_q(M_{ij}{}^q)$ is a pre-defined function of the q-th QoS mode component $M_{ij}{}^q$.

**12.** Method according to claim 11, wherein as the QoS mode components $M_{ij}{}^q$ at least one of the following quantities is provided: packet throughput, error rate, delay, bandwidth, jitter.

**13.** Method according to any of the preceding claims, wherein as the pre-defined traffic types t, at least one of background, best effort, voice, video is provided.

**14.** Method according to any of the preceding claims, comprising the following additional steps:

- generating a Connectivity Quality Data Map, CQDM, based on the connectivity device master map, CDMM, to indicate an in-vehicle connectivity device quality level for each wireless connection by time-wise quantizing a pre-defined data set or data subset of the CDMM using a pre-defined averaging function for a pre-defined averaging time interval T, and/or
- generating a Connectivity Zone Map, CZM, by geographically quantizing geographical locations by mapping with the Connectivity Quality Data Map, CQDM, into pre-defined connectivity zones $CZ_i$ such that the data of the Connectivity Quality Data Map, CQDM, is mapped onto geographical location information depending on the location where they apply.

**15.** Electronic control unit with an electronic processor circuitry, wherein the electronic control unit is designed to control data traffic between a) at least one electronic control unit that is running at least one application and b) at least one electronic control unit with at least one connectivity device and wherein the electronic processor circuitry is designed to perform a method according one of the preceding claims.

**Patentansprüche**

**1.** Verfahren zur Verwaltung mindestens eines drahtlosen Konnektivitätsdienstes für mindestens eine Anwendung in einem Fahrzeug, wobei das Fahrzeug mehrere Konnektivitätsgeräte umfasst, die mindestens eine drahtlose Verbindung betreiben, wobei der jeweilige drahtlose Konnektivitätsdienst auf der mindestens einen drahtlosen Verbindung basiert,

wobei eine Konnektivitätsverwaltungseinheit (ICMU) die folgenden Schritte durchführt:

- Betreiben eines Verbindungsqualitätsschätzers (LQE) zum Bestimmen einer jeweiligen Verbindungsqualitätsmetrik (LQM) der jeweiligen drahtlosen Verbindung jedes der Konnektivitätsgeräte,
- Betreiben eines Sende-($T_X$)-Leistungsschätzers (TPE) zur Bestimmung einer jeweiligen mittleren abgestrahlten Sendeleistung $P_T$ und eines jeweiligen SAR-Pegels $P_{SAR\_PWR}$ und eines jeweiligen Stromverbrauchs Pc jedes Konnektivitätsgeräts,

- Betreiben eines Dienstgüte-(QoS)-Schätzers (QSE) zum Bestimmen einer jeweiligen QoS-Modus-Metrik (QMM), die eine Eignung der jeweiligen drahtlosen Verbindung jedes der Konnektivitätsgeräte zur Durchführung des jeweiligen drahtlosen Konnektivitätsdienstes für mindestens einen vordefinierten Verkehrstyp t quantifiziert,
- Betreiben eines Konnektivitätsmetrik-Generators (CMG) zur Bereitstellung einer Konnektivitätsgeräte-Masterkarte (CDMM), die die Ausgabe des Verbindungsqualitätsschätzers (LQE) des $T_X$-Leistungsschätzers (TPE) und des QoS-Schätzers (QSE) auflistet,
- wenn die mindestens eine Anwendung einen jeweiligen Bedarf für den jeweiligen drahtlosen Konnektivitätsdienst signalisiert, Bestimmen des jeweiligen Verkehrstyps t für den jeweiligen Konnektivitätsdienst auf der Grundlage einer Dienstklasse der Anwendung,
- Betreiben eines Konnektivitätsmodusselektors (CMS), um für jede Anwendung mindestens eines der Konnektivitätsgeräte auszuwählen, für das eine Konnektivitätsbewertungsfunktion ein maximales Ergebnis liefert,

wobei die Konnektivitätsbewertungsfunktion einen vordefinierten Datensatz oder Datenteilsatz der Konnektivitätsgeräte-Masterkarte (CDMM) für die ermittelte Verkehrsart t auf einen jeweiligen Bewertungswert abbildet,

- Aufbauen des jeweiligen drahtlosen Konnektivitätsdienstes unter Verwendung der jeweiligen Drahtlosverbindung jedes ausgewählten Konnektivitätsgeräts.

2. Verfahren nach Anspruch 1, wobei die Konnektivitätsgeräte in n elektronischen Steuereinheiten (ECU) mit Index i bereitgestellt werden und jede $ECU_i$ eine Anzahl $k_i$ der Konnektivitätsgeräte bereitstellt, so dass jedes Konnektivitätsgerät durch einen Index i seines $ECU_i$ und einen Index j der $k_i$ Konnektivitätsgeräte der $ECU_i$ identifiziert wird, und

wobei für das Auswählen des mindestens einen Konnektivitätsgeräts die folgende Maximierung der Konnektivitätsbewertungsfunktion durchgeführt wird:

$$max \frac{\Sigma_{i,j} w_{i,j} R(i,j)}{\Sigma_{i,j} P_T(i,j) + \Sigma_{i,j} P_C(i,j)},$$

wobei

$w_{i,j}$ ein vordefinierter Gewichtungsfaktor der i-ten ECU und ihres j-ten Konnektivitätsgeräts ist, $R(i,j)$ eine Nutzenfunktion der i-ten ECU und ihres j-ten Konnektivitätsgeräts mit $R(i,j) = \delta\{QMM(i,j,t), LQM(i,j)\}$ ist, wobei $\delta\{\}$ eine vordefinierte Funktion zum Kombinieren von QMM und LQM ist.

3. Verfahren nach einem der vorhergehenden Ansprüche, das die folgenden zusätzlichen Schritte der Konnektivitätsverwaltungseinheit (ICMU) umfasst:

- Erkennen, ob eines der Konnektivitätsgeräte überhitzt ist,
- wenn ein überhitztes Konnektivitätsgerät erkannt wird, Einleiten einer Wärmemanagementfunktion und, falls die Wärmemanagementfunktion fehlschlägt, Ausschließen des Konnektivitätsgeräts von der Auswahl.

4. Verfahren nach Anspruch 3, wobei die Wärmemanagementfunktion Folgendes umfasst:

- Betreiben eines Wärmestatusmonitors (TSM) zum Bestimmen verfügbarer jeweiliger Wärmeminderungsmodi (TMM) für verschiedene Temperaturbereiche jedes Konnektivitätsgeräts und Umschalten von einem aktuellen TMM zu einem anderen neuen TMM, wenn die Temperatur des Konnektivitätsgeräts in dem Temperaturbereich des neuen TMM liegt, und/oder
- Umschalten auf ein anderes der Konnektivitätsgeräte, wenn die Drahtlosverbindung des anderen Konnektivitätsgeräts mit der Drahtlosverbindung des überhitzten Konnektivitätsgeräts gemäß einem vordefinierten Kompatibilitätskriterium kompatibel ist, und/oder
- Auffinden eines Interworking-Konnektivitätsgeräts und Weiterleiten eines Teils des Datenverkehrs des überhitzten Konnektivitätsgeräts an das Interworking-Konnektivitätsgerät anstelle des überhitzten Konnektivitätsgeräts.

5. Verfahren nach Anspruch 4, wobei der Wärmestatusmonitor (TSM) Folgendes umfasst:

- Empfangen von Sensordaten für jedes der Konnektivitätsgeräte,
- Erstellen einer Zuordnungstabelle der Temperaturniveaus (TL) der Konnektivitätsgeräte,
- Erstellen einer Nachschlagetabelle der Wärmeminderungsmodi (TMM) mit Temperaturschwellenwerten (TH) für jedes der Konnektivitätsgeräte, wobei die Temperaturniveaus (TL) jeweils einen mehrere Temperaturwerte umfassenden Temperaturbereich beschreiben, und wobei das jeweilige Temperaturschwellenniveau (TH) eines der Temperaturniveaus (TL) angibt.

6. Verfahren nach Anspruch 4 oder 5, wobei die Wärmeminderungsmodi (TMM) mindestens einen der folgenden Punkte umfassen:
Datendrosselung, Zurücksetzung der maximalen $T_X$-Leistung, Begrenzung/Deaktivierung der Datenübertragungsmodi, Abschaltung, Dienstmodusreduzierung.

7. Verfahren nach einem der Ansprüche 3 bis 6, wobei die Wärmemanagementfunktion Folgendes umfasst:

- Überprüfen, ob die Anwendung der Wärmemanagementfunktion dazu führt, dass die Sendeleistung $P_T$ jeder Drahtlosverbindung unter dem jeweiligen SAR-Pegel $P_{SAR\_PWR}$ für jedes Konnektivitätsgerät liegt und/oder
- Überprüfen, ob die Anwendung der Wärmemanagementfunktion zu einer Verbindungsqualität führt, die die erforderliche QoS-Modus-Metrik (QMM) für jeden laufenden Konnektivitätsdienst erfüllt.

8. Verfahren nach einem der vorhergehenden Ansprüche, wobei der Sendeleistungsschätzer (TPE) Folgendes umfasst:

- Empfangen von Näherungssensordaten, die eine menschliche Körpernähe zu einer jeweiligen Antennenkonfiguration signalisieren, die von dem jeweiligen Konnektivitätsgerät verwendet wird,
- Bestimmen des jeweiligen SAR-Pegels $P_{SAR\_PWR}$ auf der Grundlage der Daten des Näherungssensors.

9. Verfahren nach Anspruch 8, wobei der Sendeleistungsschätzer (TPE) zusätzlich Folgendes umfasst:

- Empfangen von Informationen über die Empfangs-$T_X$-Leistung jedes der Konnektivitätsgeräte,
- Erstellen einer Zuordnungstabelle von $T_X$-Leistungs-Delta-Metriken (TPM) der Konnektivitätsgeräte für die Konnektivitätsgeräte-Masterkarte (CDMM), wobei die $T_X$-Leistungs-Delta-Metriken (TPM) für das jeweilige Konnektivitätsgerät wie folgt berechnet werden:

$$TPM = P_{SAR\_PWR} - P_T$$

wobei TPM größer oder gleich 0 sein muss.

10. Verfahren nach einem der vorhergehenden Ansprüche, wobei der Verbindungsqualitätsschätzer (LQE) Folgendes umfasst:

- Empfangen von vordefinierten Verbindungsqualitätsinformationen für jedes der Konnektivitätsgeräte,
- Erstellen einer Nachschlagetabelle von Verbindungsqualitätsmetriken (LQM) der Konnektivitätsgeräte aus den Verbindungsqualitätsinformationen, wobei die Verbindungsqualitätsmetriken (LQM) jeweils einen Satz von Messungen angeben, insbesondere SNR, RSSI, PER, und/oder
- aus den Verbindungsqualitätsinformationen und/oder aus den Verbindungsqualitätsmetriken (LQM), Erstellen einer Zuordnungstabelle von Verbindungsqualitätsniveaus (LQL), wobei das Verbindungsqualitätsniveau (LQL) die Verbindungsqualität jedes gegebenen Konnektivitätsgeräts angibt, insbesondere als eine von sehr stabil, stabil, instabil, sehr instabil, in P-Niveaus.

11. Verfahren nach einem der vorhergehenden Ansprüche, wobei die Konnektivitätsgeräte in n elektronischen Steuergeräten (ECU) mit Index i bereitgestellt werden und jedes $ECU_i$ $k_i$ der Konnektivitätsgeräte bereitstellt, so dass jedes Konnektivitätsgerät durch einen Index i seines $ECU_i$ und einen Index j der $k_i$ Konnektivitätsgeräte des $ECU_i$ identifiziert wird, und wobei der QoS-Schätzer (QSE) Folgendes umfasst:

- Empfangen der unterstützten k QoS-Modus-Komponenten $M_{ij}{}^q$ der Konnektivitätsgeräte,

- Erstellen einer Zuordnungstabelle der QoS-Modus-Metriken (QMM) der Konnektivitätsgeräte, wobei die jeweilige QMM berechnet wird als

$$QMM(i,j,t) \triangleq \sum_{q=1}^{k} w_q \times f_q(M_{ij}^q(t))$$

wobei

QMM( ) die QoS-Modus-Metrik des i-ten Steuergeräts und seines j-ten Konnektivitätsgeräts ist,

t der Verkehrsartenindex ist,

$w_q$ ein vordefinierter Gewichtungswert zur Signalisierung einer vordefinierten Prioritätsstufe der q-ten QoS-Modus-Metrik ist, und

$f_q(M_{ij}^q)$ eine vordefinierte Funktion der g-ten QOS-Modus-Komponente $M_{ij}^q$. ist.

12. Verfahren nach Anspruch 11, wobei als QOS-Modus-Komponenten $M_{ij}^q$ mindestens eine der folgenden Größen bereitgestellt wird:
Paketdurchsatz, Fehlerrate, Verzögerung, Bandbreite, Jitter.

13. Verfahren nach einem der vorhergehenden Ansprüche, wobei als vordefinierte Verkehrsarten t mindestens eine der folgenden Arten bereitgestellt wird: Hintergrund, Best Effort, Sprache, Video.

14. Verfahren nach einem der vorhergehenden Ansprüche, umfassend die folgenden zusätzlichen Schritte:

- Erstellen einer Konnektivitätsqualitäts-Datenkarte (CQDM) auf der Grundlage der Konnektivitätsgeräte-Masterkarte (CDMM), um ein fahrzeuginternes Konnektivitätsgeräte-Qualitätsniveau für jede Drahtlosverbindung durch zeitliches Quantisieren eines vordefinierten Datensatzes oder einer Datenuntermenge der CDMM unter Verwendung einer vordefinierten Mittelungsfunktion für ein vordefiniertes Mittelungszeitintervall T anzuzeigen, und/oder
- Erstellen einer Konnektivitätszonenkarte (CZM) durch geografische Quantifizierung geografischer Orte durch Zuordnung mit der Konnektivitätsqualitäts-Datenkarte (CQDM) zu vordefinierten Konnektivitätszonen ($CZ_i$), so dass die Daten der Konnektivitätsqualitäts-Datenkarte (CQDM) auf geografische Standortinformationen in Abhängigkeit von dem Ort, an dem sie gelten, abgebildet werden.

15. Elektronisches Steuergerät mit einer elektronischen Prozessorschaltung, wobei das elektronische Steuergerät dazu ausgebildet ist, den Datenverkehr zwischen a) mindestens einem elektronischen Steuergerät, auf dem mindestens eine Anwendung läuft, und b) mindestens einem elektronischen Steuergerät mit mindestens einem Konnektivitätsgerät zu steuern, und wobei die elektronische Prozessorschaltung dazu ausgebildet ist, ein Verfahren nach einem der vorhergehenden Ansprüche durchzuführen.

**Revendications**

1. Procédé de gestion d'au moins un service de connectivité sans fil pour au moins une application dans un véhicule, dans lequel le véhicule comprend plusieurs dispositifs de connectivité exécutant au moins une connexion sans fil, dans lequel le service de connectivité sans fil respectif est basé sur l'au moins une connexion sans fil, dans lequel une unité de gestion de connectivité, ICMU, réalise les étapes suivantes :

- l'exploitation d'un estimateur de qualité de liaison, LQE, pour déterminer une mesure de qualité de liaison, LQM, respective de la connexion sans fil respective de chacun des dispositifs de connectivité,
- l'exploitation d'un estimateur de puissance de transmission, TX, TPE, pour déterminer une puissance d'émission rayonnée moyenne respective $P_T$, et un niveau de SAR respectif $P_{SAR\_PWR}$ et une consommation de puissance Pc respective de chaque dispositif de connectivité,
- l'exploitation d'un estimateur de qualité de service, QoS, QSE, pour déterminer une métrique de mode de QoS, QMM, respective qui quantifie une adéquation de la connexion sans fil respective de chacun des dispositifs de connectivité pour l'exécution du service de connectivité sans fil respectif pour au moins un type de trafic prédéfini t,
- l'exploitation d'un générateur de métrique de connectivité, CMG, pour fournir une carte maîtresse de dispositifs de connectivité, CDMM, qui répertorie la sortie de l'estimateur de qualité de liaison, LQE, de l'estimateur de puissance Tx, TPE, et de l'estimateur de QoS, QSE,

- lorsque l'au moins une application signale une demande respective du service de connectivité sans fil respectif, la détermination pour le service de connectivité respectif du type de trafic t respectif en fonction d'une classe de service de l'application,
- l'exploitation d'un sélecteur de mode de connectivité, CMS, pour sélectionner pour chaque application au moins un des dispositifs de connectivité pour lequel une fonction d'évaluation de connectivité produit un résultat maximisé, dans lequel la fonction d'évaluation de connectivité mappe un ensemble de données ou sous-ensemble de données prédéfini de la carte maîtresse de dispositifs de connectivité, CDMM, pour le type de trafic t déterminé sur une valeur d'évaluation respective,
- l'établissement du service de connectivité sans fil respectif à l'aide de la connexion sans fil respective de chaque dispositif de connectivité sélectionné.

2. Procédé selon la revendication 1, dans lequel les dispositifs de connectivité sont fournis dans n unités de commande électronique, ECU, d'un indice i et chaque $ECU_i$ fournit $k_i$ des dispositifs de connectivité, de telle sorte que chaque dispositif de connectivité soit identifié par un indice i de son $ECU_i$ et un indice j des $k_i$ dispositifs de connectivité de l'$ECU_i$ et dans lequel pour sélectionner l'au moins un dispositif de connectivité, la maximisation suivante de la fonction d'évaluation de connectivité est réalisée :

$$\max \frac{\sum_{i,j} w_{i,j} R(i,j)}{\sum_{i,j} P_T(i,j) + \sum_{i,j} P_C(i,j)},$$

dans lequel

$w_{i,j}$ est un facteur de pondération prédéfini de l'i-ème ECU et de son j-ème dispositif de connectivité, R(i,j) est une fonction d'utilité de l'i-ème ECU et de son j-ème dispositif de connectivité avec R(i,j) = δ{ QMM(i,j,t), LQM(i,j) }, dans lequel δ{ } est une fonction prédéfinie pour combiner QMM et LQM.

3. Procédé selon l'une quelconque des revendications précédentes, comprenant les étapes supplémentaires suivantes de l'unité de gestion de connectivité, ICMU :

- la détection qu'un des dispositifs de connectivité est ou non en surchauffe,
- si un dispositif de connectivité en surchauffe est détecté, le lancement d'une fonction de gestion thermique et, en cas de défaillance de la fonction de gestion thermique, l'exclusion du dispositif de connectivité de la sélection.

4. Procédé selon la revendication 3, dans lequel la fonction de gestion thermique (F) comprend :

- l'utilisation d'un moniteur d'état thermique, TSM, pour déterminer des modes d'atténuation thermique, TMM, respectifs possibles, pour différentes plages de température de chaque dispositif de connectivité, et le basculement d'un TMM courant sur un autre nouveau TMM, si la température du dispositif de connectivité est comprise dans la plage de température du nouveau TMM, et/ou
- le basculement sur un autre dispositif de connectivité si la connexion sans fil de l'autre dispositif de connectivité est compatible avec la connexion sans fil du dispositif de connectivité en surchauffe selon un critère de compatibilité prédéfini, et/ou
- la recherche d'un dispositif de connectivité interfonctionnel et le routage d'un trafic de données du dispositif de connectivité en surchauffe vers le dispositif de connectivité interfonctionnel à la place du dispositif de connectivité en surchauffe.

5. Procédé selon la revendication 4, dans lequel le moniteur d'état thermique, TSM, comprend :

- la réception de données de capteurs pour chacun des dispositifs de connectivité,
- la génération d'une carte de mappage de niveaux de température, TL, des dispositifs de connectivité,
- la génération d'un table de consultation des modes d'atténuation thermique, TMM, avec des niveaux seuils de température, TH, pour chacun des dispositifs de connectivité, dans lequel les niveaux de température, TL, décrivent chacun une plage de températures comprenant plusieurs valeurs de température et dans lequel le niveau seuil de température, TH, respectif indique un des niveaux de température, TL.

**6.** Procédé selon la revendication 4 ou 5, dans lequel les modes d'atténuation thermique, TMM, comprennent au moins : une limitation de données, une réduction de puissance Tx maximale, une limitation/désactivation de modes de transmission de données, un arrêt, une réduction de mode de service.

**7.** Procédé selon l'une quelconque des revendications 3 à 6, dans lequel la fonction de gestion thermique comprend :

- la vérification que l'application de la fonction de gestion thermique entraîne une puissance d'émission $P_T$ de chaque connexion sans fil inférieure au niveau SAR respectif $P_{SAR\_PWR}$ pour chaque dispositif de connectivité et/ou
- la vérification que l'application de la fonction de gestion thermique entraîne une qualité de liaison qui satisfait la métrique de mode QoS, QMM, requise, pour chaque service de connectivité en cours d'exécution.

**8.** Procédé selon l'une quelconque des revendications précédentes, dans lequel l'estimateur de puissance d'émission, TPE, comprend :

- la réception de données de capteur de proximité signalant la proximité d'un corps humain à une configuration d'antenne respective utilisée par le dispositif de connectivité respectif,
- la détermination du niveau SAR respectif $P_{SAR\_PWR}$ en fonction des données de capteur de proximité.

**9.** Procédé selon la revendication 8, dans lequel l'estimateur de puissance d'émission, TPE, comprend en outre :

- la réception d'informations de puissance Tx de chacun des dispositifs de connectivité,
- la génération d'une table de mappage de métriques delta de puissance Tx, TPM, des dispositifs de connectivité pour la carte maîtresse de dispositifs de connectivité, CDMM, dans lequel les métriques delta de puissance Tx, TPM, sont calculées pour le dispositif de connectivité respectif comme suit :

$$TPM = P_{SAR\,PWR} - P_T,$$

dans lequel TPM doit être supérieure ou égale à 0.

**10.** Procédé selon l'une quelconque des revendications précédentes, dans lequel l'estimateur de qualité de liaison, LQE, comprend :

- la réception d'informations de qualité de liaison prédéfinies pour chacun des dispositifs de connectivité,
- à partir des informations de qualité de liaison la génération d'une table de consultation de métriques de qualité de liaison, LQM, des dispositifs de connectivité, dans lequel les métriques de qualité de liaison, LQM, indiquent chacune un ensemble de mesures, en particulier SNR, RSSI, PER, et/ou
- à partir des informations de qualité de liaison et/ou des métriques de qualité de liaison, LQM, la génération d'une table de mappage de niveaux de qualité de liaison, LQL, dans lequel le niveau de qualité de liaison, LQL, indique la qualité de connexion de chaque dispositif de connectivité donné, en particulier en tant que dispositif très stable, stable, instable, très instable, en P niveaux.

**11.** Procédé selon l'une quelconque des revendications précédentes, dans lequel les dispositifs de connectivité sont fournis dans n unités de commande électronique, ECU, avec un indice i et chaque $ECU_i$ fournit $k_i$ des dispositifs de connectivité, de telle sorte que chaque dispositif de connectivité soit identifié par un indice i de son $ECU_i$ et un indice j des $k_i$ dispositifs de connectivité de l'ECUi et dans lequel l'estimateur de QS, QSE, comprend :

- la réception de k composantes de mode de QoS prises en charge $M_{ij}{}^q$ des dispositifs de connectivité,
- la génération d'une table de mappage des métriques de mode de QoS, QMM, des dispositifs de connectivité, dans lequel la QMM respective est calculée comme suit :

$$QMM(i,j,t) \triangleq \sum_{q=1}^{k} w_q \times f_q(M_{ij}^q(t))$$

dans lequel

QMM(.) est la métrique de mode de QoS de l' i-ème ECU et de son j-ème dispositif de connectivité, t est l'indice de type de trafic,

$W_q$ est une valeur de poids prédéfinie pour signaler un niveau de priorité prédéfini d'une q-ième métrique de mode de QoS, et

fq($M_{ij}^q$) est une fonction prédéfinie de la q-ième composante de mode de QoS $M_{ij}^q$.

12. Procédé selon la revendication 11, dans lequel comme composantes du mode de QoS $M_{ij}^q$ au moins une des quantités suivantes est fournie : débit de paquets, taux d'erreurs, retard, largeur de bande, gigue.

13. Procédé selon l'une des revendications précédentes, dans lequel comme types de trafic t prédéfinis, au moins un type d'arrière-plan, de meilleur effort, de voix, de vidéo est fourni.

14. Procédé selon l'une quelconque des revendications précédentes, comprenant les étapes supplémentaires suivantes :

- la génération d'une carte de données de qualité de connectivité, CQDM, basée sur la carte maîtresse de dispositifs de connectivité, CDMM, pour indiquer un niveau de qualité de dispositif de connectivité embarqué pour chaque connexion sans fil en quantifiant dans le temps un ensemble de données prédéfini ou un sous-ensemble de données de la CDMM à l'aide d'une fonction de moyennage prédéfinie pour un intervalle de temps de moyennage prédéfini T, et/ou

- la génération d'une carte de zone de connectivité, CZM, en quantifiant géographiquement des emplacements géographiques par mappage avec la carte de données de qualité de connectivité, CQDM, dans des zones de connectivité prédéfinies $CZ_i$ de telle sorte que les données de la carte de données de qualité de la connectivité , CQDM, soient mappées sur des informations d'emplacement géographique en fonction de l'emplacement où elles s'appliquent.

15. Unité de commande électronique dotées de circuits de traitement électroniques, l'unité de commande électronique étant conçue pour réguler le trafic de données entre a) au moins une unité de commande électronique qui exécute au moins une application et b) au moins une unité de commande électronique avec au moins un dispositif de connectivité et dans laquelle les circuits de traitement électroniques sont conçus pour réaliser un procédé selon l'une des revendications précédentes.

EP 4 007 373 B1

GNSS Network
(GPS/Galileo/Glonass/Beidu)

Non-Terrestrial Network
(SATCOM)

Broadcast Network
(FM/AM/DAB/SDARS)

IOT Network
(LTE-M/NB-IOT)

Cellular Network
(2G/3G/4G/5G)

Emergency Call Network
(eCall/E911/ERA-GLONASS)

Wi-Fi Network
(80211abgn/ac/ax)

UWB Networks
(802.15.4)

WiGig Network
(802.11ad/ay)

V2X
(Cellular V2X/DSRC)

Bluetooth/BLE Net-
work (BT4.x/5.x)

EV Charging Network
(Powerline/Wireless)

Antenna Configuration System

Short-Range Network
(NFC,RFID)

| Connectivity ECU | Connectivity ECU | ... | Connectivity ECU |

─10

Backend Server Network

| Vehicle OEM Server | Supplier Server | 3rd party Server |

| Connectivity Network Domain | Connected Gateway |

Vehicle

-------- Wireless connection
———— Wireline connection

*Fig.1*

High Computing Platform

In-Vehicle Server

Connected Gateway

Infotainmant Network Domain

Chassis Network Domain

Connectivity Network Domain

Body Network Domain

Powertrain Network Domain

Diagnostic Network Domain

ADAS/AD Network Domain

ECU Network Branch

ECU Network Branch

ECU Network Branch

...

ECU Network Branch

*Fig.2*

## Connectivity Devices in ECU

| | | |
|---|---|---|
| Cellular | Emergency call | Wi-Fi |
| Bluetooth | V2X | Location positioning |
| Broadcast | WiGig | UWB |
| Short-range | Ethernet | IOT |

Others /NTN,PLC,CAN,etc.)

*Fig.3*

Fig.4

Intelligent Connectivity Management Unit (ICMU)

| Thermal Status Monitor | Link Quality Estimator | Tx Power Estimator |

| QoS Estimator | Connectivity Metric Generator | Connectivity Mode Selector |

Fig.5

EP 4 007 373 B1

**Thermal Status Monitor (TSM)**

```
┌─────────────────────────────────────────┐
│   Receive sonsor data from each ECU of   │
│            connectivity devices          │
└─────────────────────────────────────────┘
                     │
                     ▼
┌─────────────────────────────────────────┐
│     Generate mapping table of temperature│
│  levels of connectivity devices of each ECU│
└─────────────────────────────────────────┘
                     │
                     ▼
┌──────────────────────────────────────────────────────┐
│  Generate lokk-up table of thermal mitigation modes with │
│ temperature threshold levels of connectivity devices of each ECU│
└──────────────────────────────────────────────────────┘
```

*Fig.6*

Temperature Mapping Table:

Fig.7

EP 4 007 373 B1

Mitigation Look-Up Table:

| Connectivity Sub-network | | | | | | | | |
|---|---|---|---|---|---|---|---|---|

TSM Mitigation LUT     $ECU_1$      ...      $ECU_n$

| | CD(1,1) | CD(1,2) | ... | CD(1,$k_1$) | ... | CD(n,1) | CD(n,2) | ... | CD(n,$k_n$) |
|---|---|---|---|---|---|---|---|---|---|
| $TH_1$ | TMM(1,1,1) | TMM(1,2,1) | ... | TMM(1,$k_1$,1) | ... | TMM(n,1,1) | TMM(n,2,1) | ... | TMM(n,$k_n$,1) |
| $TH_2$ | TMM(1,1,2) | TMM(1,2,2) | ... | TMM(1,$k_1$,2) | ... | TMM(n,1,2) | TMM(n,2,2) | ... | TMM(n,$k_n$,2) |
| $\vdots$ | | | | | | | | | |
| $TH_s$ | TMM(1,1,s) | TMM(1,2,s) | ... | TMM(1,$k_1$,s) | ... | TMM(n,1,s) | TMM(n,2,s) | ... | TMM(n,$k_n$,s) |

Threshold Level

*Fig.8*

EP 4 007 373 B1

Link Quality Estimator (LQE)

Receive link quality information from each ECU of connectivity devices

Generate look-up table of link quality metrics of connectivity devices of each ECU

Generate mapping table of link quality levels with metrics of connectivity devices of each ECU

Fig.9

LQE Look-Up Table:

| Connectivity Sub-network | | | | | | | | | |
|---|---|---|---|---|---|---|---|---|---|

| LQE LUT | ECU$_1$ | | | | ... | | ECU$_n$ | | |
|---|---|---|---|---|---|---|---|---|---|
| | CD(1,1) | CD(1,2) | ... | CD(1,k$_1$) | ... | CD(n,1) | CD(n,2) | ... | CD(n,k$_n$) |
| Link Quality Metric | LQM(1,1) | LQM(1,2) | ... | LQM(1,k$_1$) | ... | LQM(n,1) | LQM(n,2) | ... | LQM(n,k$_n$) |

*Fig.10*

EP 4 007 373 B1

Temperature Mapping Table:

| Connectivity Sub-network | | |
|---|---|---|

| TSM Temperature Mapping Table | $ECU_1$<br>$CD(1,1)$ $CD(1,2)$ ... $CD(1,k_1)$ | ... | $ECU_n$<br>$CD(n,1)$ $CD(n,2)$ ... $CD(n,k_n)$ |
|---|---|---|---|

Link Quality Level

$LQL_1$

$LQL_2$

⋮

$LQL_p$

LQM(i,j) from CD(i,j) of connectivity devices of ECUs are recorded in this area

<u>Note:</u>

$ECU_n$ : $n^{th}$ ECU

$CD(n,k_n)$ : $k_n^{th}$ connectivity devices of $ECU_n$

$LQM(n,k_n)$ : Link quality metric of $k_n^{th}$ devices of $ECU_n$

$LQM_p$ : $p^{th}$ level of link quality

*Fig.11*

EP 4 007 373 B1

**Tx Power Estimator (TPE)**

Receive proximity sensor data about human body proximity

Receive Tx power information from each ECU of connectivity devices

Generate mapping table of Tx power delta metrics of connectivity devices of each ECU

*Fig.12*

TPE Mapping Table:

| Connectivity Sub-network | | | | | | | | | | |
|---|---|---|---|---|---|---|---|---|---|---|
| **TPE Mapping Table** | **ECU$_1$** | | | | ... | **ECU$_n$** | | | | |
| | CD(1,1) | CD(1,2) | ... | CD(1,k$_1$) | ... | CD(n,1) | CD(n,2) | ... | CD(n,k$_n$) | |
| **Tx Power Delta Metric** | TPM(1,1) | TPM(1,2) | ... | TPM(1,k$_1$) | ... | TPM(n,1) | TPM(n,2) | ... | TPM(n,k$_n$) | |

*Fig.13*

# QoS Estimator (QSE)

Receive QoS modes from each ECU of
connectivity devices

Generate mapping table of QoS mode metrics
of connectivity devices of each ECU

*Fig.14*

QSE Mapping Table:

| Connectivity Sub-network | | | | | | | | | |
|---|---|---|---|---|---|---|---|---|---|

| QSE Mapping Table | $ECU_1$ | | | | ... | | $ECU_n$ | | |
|---|---|---|---|---|---|---|---|---|---|
| | $CD(1,1)$ | $CD(1,2)$ | ... $CD(1,k_1)$ | | ... | $CD(n,1)$ | $CD(n,2)$ | ... | $CD(n,k_n)$ |
| QoS Mode Metric | $QMM(1,1,t)$ | $TMM(1,2,t)$ | ... $QMM(1,k_1,t)$ | | ... | $QMM(n,1,t)$ | $QMM(n,2,t)$ | ...$QMM(n,k_n,t)$ | |

*Fig.15*

EP 4 007 373 B1

$$M_{ij}^q(t) \ (i^{th} \text{ ECU and } j^{th} \text{ connectivity device})$$

| q | 1 | 2 | 3 | 4 | 5 | ... | k |
|---|---|---|---|---|---|-----|---|
| QoS metric | Packet throughput | Error rate | Delay | Bandwidth | Jitter | ... | ... |

Traffic type index (t)

| t | 1 | 2 | 3 | 4 | ... | u |
|---|---|---|---|---|-----|---|
| Traffic type | Background | Best effort | Voice | Video | ... | ... |

*Fig.16*

EP 4 007 373 B1

EP 4 007 373 B1

| Connectivity Device Master Map (CDMM) | | | | | | |
|---|---|---|---|---|---|---|
| Connectivity device index | Connectivity function mode | LQE | | TPE | QSE | TSM |
| $CD(\cdot)$ | $\{1,2,...,N_{CFM}\}$ | $LQM(\cdot)$ | $LQL(\cdot)$ | $TPM(\cdot)$ | $QMM(\cdot)$ | $TMM(\cdot)$ |

| Connectivity function mode | Connectivity function |
|---|---|
| 1 | Cellular |
| 2 | Wi-Fi |
| 3 | Bluetooth |
| 4 | V2X |
| ⋮ | ⋮ |
| $N_{CFM}$ | Others |

*Fig.17*

Activate Intelligent Connectivity Management Unit

| Monitor thermal heats of each connectivity devices of each ECUs | Estimate Tx radiated power with SAR detection of each connectivity devices of each ECUs | Estimate link quality of each connectivity devices of each ECUs | Estimate QoS mode of each connectivity devices of each ECUs |

Detect connectivity device(s) with overheating

Check if the associated thermal mitigation can resolve overheat — Yes → Check if SAR level is satisfied — Yes → Check if link quality is satisfied

No → No → No

Check if ohter compatible connectivity device exists — Yes → Check if SAR level is satisfied — Yes → Check if link quality is satisfied

No → No → No

Check if interworking connectivity device exists — Yes → Check if SAR level is satisfied — Yes → Check if link quality is satisfied

No → No → No

Measure Connectivity Metric → Select the best connectivity device of each ECUs for operations

F

*Fig.18*

Connectivity Zone Map

*Fig.19*

EP 4 007 373 B1

| Connectivity Quality Data Map (CQDM) | Connectivity Zone Map (CZM) |

$i^{th}$ Connectivity Zone, $CZ_i$

$$\frac{\Sigma_T LQM(\cdot)}{T}$$

$$\frac{\Sigma_T LQL(\cdot)}{T}$$

$$\frac{\Sigma_T TPM(\cdot)}{T}$$

$$\frac{\Sigma_T QMM(\cdot)}{T}$$

$$\frac{\Sigma_T TMM(\cdot)}{T}$$

$CZ_1$

$CZ_2$

$\vdots$

$CZ_G$

*Fig.20*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020221554 A1